(19) 

Europäisches
Patentamt
European
Patent Office
Office européen
des brevets

(11) **EP 4 586 034 A1**

(12) **EUROPEAN PATENT APPLICATION**
published in accordance with Art. 153(4) EPC

(43) Date of publication:
**16.07.2025 Bulletin 2025/29**

(21) Application number: **22960292.5**

(22) Date of filing: **30.09.2022**

(51) International Patent Classification (IPC):
***G05D 1/00*** (2024.01)

(52) Cooperative Patent Classification (CPC):
**G05D 1/00**

(86) International application number:
**PCT/CN2022/123262**

(87) International publication number:
**WO 2024/065671 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **LI, Hao
Shenzhen, Guangdong 518129 (CN)**
• **PAN, Yangjie
Shenzhen, Guangdong 518129 (CN)**
• **DING, Tao
Shenzhen, Guangdong 518129 (CN)**

(74) Representative: **Maiwald GmbH
Engineering
Elisenhof
Elisenstrasse 3
80335 München (DE)**

(54) **PLATOONING CONTROL METHOD AND APPARATUS, AND INTELLIGENT DRIVING DEVICE**

(57)    This application discloses a platoon control method and apparatus, and an intelligent driving device, and pertains to the field of intelligent driving technologies. In the method, the platoon control apparatus may adjust an operating frequency of a sensor on a movable object in a platoon based on current status data of the platoon, to flexibly adjust power consumption of the platoon based on the current status data, and avoid a problem of excessively high power consumption of the platoon in some scenarios. In addition, after the operating frequency of the sensor in the platoon is adjusted, for example, the operating frequency of the sensor is lowered, data collected by the sensor is reduced, and correspondingly, data that needs to be processed in the platoon is also reduced. This saves computing resources of the platoon.

EP 4 586 034 A1

Obtain current status data of a platoon, where the platoon includes M movable objects, and M is a positive integer greater than or equal to 2 — 601

Determine a target sensor configuration based on the current status data, where the target sensor configuration includes sensor operating frequency information of N movable objects in the M movable objects, the target sensor configuration is capable of implementing safe traveling of the platoon, and N is less than or equal to M — 602

Deliver corresponding sensor operating frequency information to each movable object in the N movable objects, so that the movable object adjusts an operating frequency of a sensor on the movable object based on the corresponding sensor operating frequency information — 603

FIG. 6

**Description**

**TECHNICAL FIELD**

This application relates to the field of intelligent driving technologies, and in particular, to a platoon control method and apparatus, and an intelligent driving device.

**BACKGROUND**

Platooning in intelligent driving means that a plurality of movable objects such as vehicles form a queue according to a pre-planned formation. Sensors such as an image sensor (for example, a camera or an infrared sensor) and a radar sensor (for example, a lidar, a millimeter-wave radar, or an ultrasonic radar) are configured on each movable object. In a traveling process of each movable object in a platoon, a traveling direction, a traveling speed, and the like of each movable object may be controlled based on data collected by the sensors, so that the movable objects maintain the formation of the platoon in the traveling process.

**SUMMARY**

This application provides a platoon control method and apparatus, and an intelligent driving device, to flexibly adjust platoon power consumption in intelligent driving.

According to a first aspect, a platoon control method is provided. In the method, current status data of a platoon is obtained, where the platoon includes M movable objects, and M is a positive integer greater than or equal to 2; a target sensor configuration is determined based on the current status data, where the target sensor configuration includes sensor operating frequency information of N movable objects in the M movable objects, the target sensor configuration is capable of implementing safe traveling of the platoon, and N is less than or equal to M; and corresponding sensor operating frequency information is delivered to each movable object in the N movable objects, so that the movable object adjusts an operating frequency of a sensor on the movable object based on the corresponding sensor operating frequency information.

In this application, an operating frequency of a sensor on a movable object in the platoon may be adjusted based on the current status data of the platoon, to flexibly adjust power consumption of the platoon based on the current status data, and avoid a problem of excessively high power consumption of the platoon in some scenarios. In addition, after the operating frequency of the sensor in the platoon is adjusted, for example, the operating frequency of the sensor is lowered, data collected by the sensor is reduced, and correspondingly, data that needs to be processed in the platoon is also reduced. This saves computing resources of the platoon.

Optionally, an implementation of determining the target sensor configuration based on the current status data may be: determining the target sensor configuration from a plurality of candidate sensor configurations based on the current status data.

In this application, the plurality of candidate sensor configurations may be preset, to quickly determine the target sensor configuration based on the current status data, so as to improve platoon control efficiency.

Optionally, in the method, a plurality of initial sensor configurations may be further determined, where each of the plurality of initial sensor configurations includes an operating frequency of a sensor of each of the M movable objects; a safety degree of each of the plurality of initial sensor configurations may be further determined, where the safety degree indicates a possibility that a simulated platoon is capable of safe traveling after being set based on the initial sensor configuration; and the plurality of candidate sensor configurations may be further determined from the plurality of initial sensor configurations based on the safety degree of each of the plurality of initial sensor configurations.

In this application, candidate sensor configurations may be selected based on safety degrees of different initial sensor configurations, to ensure that the platoon can subsequently safely travel after working based on a candidate sensor configuration.

Optionally, an implementation of determining the safety degree of each of the plurality of initial sensor configurations may be: for any of the plurality of initial sensor configurations, setting a sensor of each simulated object in the simulated platoon based on the any initial sensor configuration, and causing the simulated platoon to travel in a scenario use case of each of a plurality of simulated scenarios; determining, based on a traveling condition of the simulated platoon in the scenario use case of each simulated scenario, a quantity of scenario use cases in which the simulated platoon is capable of safe traveling in the plurality of simulated scenarios; and determining a ratio of the quantity of scenario use cases in which safe traveling is available to a total quantity of scenario use cases of the plurality of simulated scenarios as a safety degree of the any initial sensor configuration.

In this application, a candidate sensor configuration may be determined by simulating a driving condition of the platoon in a scenario use case of a simulated scenario. In this manner, a plurality of candidate sensor configurations can be quickly obtained through training.

Optionally, an implementation of determining the target sensor configuration from the plurality of candidate sensor configurations based on the current status data may be: inputting the current status data into a classification model, so that the classification model outputs the target sensor configuration, where the classification model is configured to classify input data into one of the plurality of candidate sensor configurations and output a classification result.

In this application, the classification model may be further trained in advance, to quickly select, from the plurality of candidate sensor configurations through the classification model, the target sensor configuration that matches the current status data.

Optionally, the classification model includes a minimum regression decision tree. In the method, a plurality of pieces of sample status data may be further obtained, where each piece of sample status data indicates one status of the simulated platoon; an initialized minimum regression decision tree may be further constructed based on the plurality of pieces of sample status data, where the initialized minimum regression decision tree includes a plurality of initial classification results, a quantity of the plurality of initial classification results is the same as a quantity of the plurality of candidate sensor configurations, and different initial classification results indicate different status complexity degrees of the simulated platoon; and the plurality of initial classification results may be bound to the plurality of candidate sensor configurations one by one, to obtain the minimum regression decision tree, where a higher status complexity level indicated by one initial classification result in the plurality of initial classification results indicates a higher operating frequency of a sensor in a candidate sensor configuration bound to the corresponding initial classification result.

The classification model provided in this application can be implemented based on the minimum regression decision tree, to improve application flexibility of this application.

Optionally, the current status data includes X status weights that are in a one-to-one correspondence with X statuses, each of the X status weights indicates a complexity degree of a corresponding status, and X is greater than or equal to 1. In this scenario, an implementation of determining the target sensor configuration based on the current status data may be: determining the target sensor configuration based on the X status weights.

For statuses in different dimensions of the platoon, a higher complexity degree of a status in each dimension indicates greater impact on power consumption of the platoon. Therefore, the complexity degree of the status in each dimension may be quantized, to obtain a status weight of the status in each dimension, so that a sensor configuration of the platoon is subsequently adjusted based on the status weight obtained through quantization.

Optionally, the X statuses include one or more of an environment status, a task status, and a load status.

A status weight corresponding to the environment status includes an environment status weight of at least one movable object in the platoon, the environment status weight indicates a complexity degree of an ambient environment status of the corresponding movable object, a status weight corresponding to the task status indicates a complexity degree of a task currently executed by a leader in the platoon, a status weight corresponding to the load status includes a load status weight of each movable object in the platoon, and the load status weight indicates a complexity degree of load of the corresponding movable object.

A more complex ambient environment of the platoon indicates that the platoon needs to process more tasks to cope with the complex environment, and correspondingly, power consumption of the platoon is higher. Therefore, a complexity degree of the ambient environment of the movable object in the platoon greatly affects overall power consumption of the platoon. In addition, as a computing center of the entire platoon, the leader in the platoon needs to process a large quantity of tasks. Therefore, a complexity degree of a task currently executed by the leader in the platoon greatly affects the overall power consumption of the platoon. In addition, the load complexity degree of each movable object in the platoon has direct impact on current power consumption of the movable object. Based on the foregoing reasons, it may be considered that the sensor configuration of the platoon is adjusted based on the environment status weight, the task status weight, and the load status weight, to reduce overall power consumption of the platoon.

Optionally, in the method, current status information of the sensor of each of the M movable objects may be further obtained; an overall energy efficiency ratio of the platoon may be further determined based on the current status information of the sensor of each of the M movable objects; and roles of at least two movable objects in the platoon may be further switched if the overall energy efficiency ratio is lower than a reference energy efficiency ratio.

In this application, a role of a movable object in the platoon may be further adjusted based on an energy efficiency ratio of the platoon, to further reduce power consumption of the platoon.

Optionally, if the overall energy efficiency ratio is lower than the reference energy efficiency ratio, an implementation of switching the roles of the at least two movable objects in the platoon may be: determining expected consumed power in a switching process if the overall energy efficiency ratio is lower than the reference energy efficiency ratio, where the switching process is a process of switching the roles of the at least two movable objects in the platoon; determining a power difference between power before switching and power after switching of the platoon; and switching the roles of the at least two movable objects in the platoon if the power difference exceeds the expected consumed power.

If the power difference exceeds the expected consumed power, it indicates that the switching process is less costly. In this case, switching the roles of the at least two movable objects in the platoon may be considered Correspondingly, if the power difference is less than the expected consumed power, it indicates that the switching process is costly. In this case, switching the roles of the at least two movable objects in the platoon may not need to be considered, to avoid causing higher power consumption.

Optionally, an implementation of determining the expected consumed power in the switching process may be: determining at least one task that needs to be executed in the switching process; and determining the expected consumed power based on empirical power of each of the at least one task, where the empirical power indicates power required when the corresponding task is executed before current time.

In the foregoing manner, the expected consumed power in the switching process can be determined, to improve application flexibility of this application.

According to a second aspect, a platoon control apparatus is provided. The apparatus has a function of implementing the platoon control method in the first aspect. The apparatus includes at least one unit, and the at least one unit is configured to implement the platoon control method provided in the first aspect and the implementations of the first aspect.

According to a third aspect, another platoon control apparatus is provided. The platoon control apparatus includes a processor and a memory. The memory is configured to store a program that supports the platoon control apparatus in performing the platoon control method provided in the first aspect and the implementations of the first aspect, and store data used to implement the platoon control method provided in the first aspect and the implementations of the first aspect. The processor is configured to execute the program stored in the memory. The platoon control apparatus may further include a communication bus, and the communication bus is used for communication between the processor and the memory.

According to a fourth aspect, an intelligent driving device is provided. The intelligent driving device includes the platoon control apparatus according to the second aspect or the third aspect. The intelligent driving device may be a vehicle, and the vehicle includes a passenger vehicle, a commercial vehicle, or an engineering vehicle.

According to a fifth aspect, a computer-readable storage medium is provided. The computer-readable storage medium stores instructions. When the instructions are run on a computer, the computer is enabled to perform the platoon control method according to the first aspect and the implementations of the first aspect.

According to a sixth aspect, a computer program product including instructions is provided. When the computer program product runs on a computer, the computer is enabled to perform the platoon control method according to the first aspect and the implementations of the first aspect.

Technical effect obtained in the second aspect to the sixth aspect is similar to technical effect obtained by the corresponding technical means in the first aspect. Details are not described herein again.

## BRIEF DESCRIPTION OF DRAWINGS

FIG. 1 is a diagram of a structure of an intelligent driving device 100 according to an embodiment of this application;
FIG. 2 is a diagram of an internal structure of a computer system 112 shown in FIG. 1 according to an embodiment of this application;
FIG. 3 is a diagram of a platoon according to an embodiment of this application;
FIG. 4 is a diagram of an architecture of a platoon control system according to an embodiment of this application;
FIG. 5 is a diagram of an architecture of another platoon control system according to an embodiment of this application;
FIG. 6 is a flowchart of a platoon control method according to an embodiment of this application;
FIG. 7 is a diagram of a simulated scenario according to an embodiment of this application;
FIG. 8 is a schematic flowchart of obtaining a plurality of candidate sensor configurations through training according to an embodiment of this application;
FIG. 9 is a diagram of a structure of a minimum regression decision tree according to an embodiment of this application;
FIG. 10 is a schematic flowchart of switching a platoon role according to an embodiment of this application;
FIG. 11 is a diagram of a scenario of switching a platoon role according to an embodiment of this application;
FIG. 12 is another schematic flowchart of switching a platoon role according to an embodiment of this application; and
FIG. 13 is a diagram of a structure of a platoon control apparatus according to an embodiment of this application.

## DESCRIPTION OF EMBODIMENTS

To make the objectives, technical solutions, and advantages of this application clearer, the following further describes embodiments of this application in detail with reference to the accompanying drawings.

Before embodiments of this application are described in detail, an application scenario of embodiments of this application is first described.

Intelligent driving means that an apparatus like a sensor, a controller, an executor, or a communication module configured on an intelligent driving device assists a driver in controlling the intelligent driving device, or implements unmanned driving in place of the driver. In view of this, intelligent driving may include assisted driving, autonomous driving, and unmanned driving. For example, the intelligent driving device may include a vehicle, an unmanned aerial vehicle, or the like.

When a plurality of intelligent driving devices have close destinations and similar driving paths, the plurality of intelligent driving devices may form a platoon and travel in a platoon form. For example, for a plurality of trucks with a same departure place and a same destination, the plurality of trucks may be formed into a platoon, to control traveling of the platoon.

There are usually two roles in the platoon: a leader and a follower. As a core computing unit, the leader receives, through network communication, data collected by a sensor of each follower, obtains data collected by a sensor of the leader, performs unified processing on data, and sends a traveling speed, direction, and the like to the follower to complete platoon control.

Operating frequencies of all sensors on each intelligent driving device in the platoon may be preconfigured. In a platoon traveling process, all the sensors of each intelligent driving device work at the preconfigured operating frequencies However, in this manner, power consumption is high and computing resources are wasted. In view of this, an embodiment of this application provides a platoon control method. According to the method, an operating frequency of a sensor of each intelligent driving device in a platoon can be flexibly adjusted. Excessively high platoon power consumption in some scenarios can be avoided. In addition, computing resources can be further saved.

The following describes a hardware architecture of the intelligent driving device in embodiments of this application.

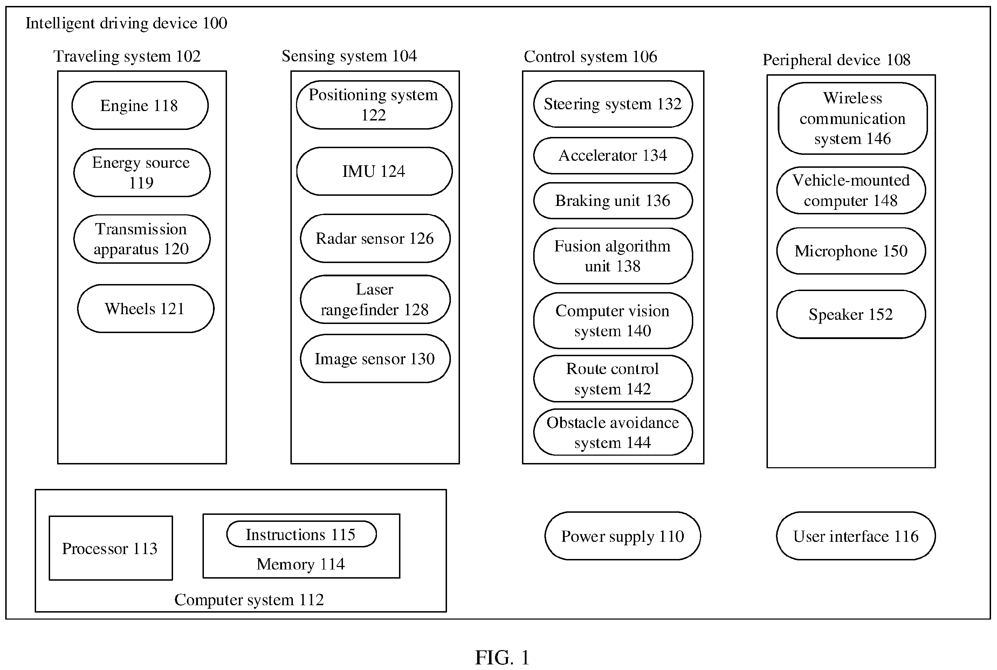

FIG. 1 is a diagram of a structure of an intelligent driving device 100 according to an embodiment of this application. As shown in FIG. 1, the intelligent driving device 100 may include a plurality of subsystems, for example, a traveling system 102, a sensing system 104, a control system 106, one or more peripheral devices 108, a power supply 110, a computer system 112, and a user interface 116 in FIG. 1. Optionally, the intelligent driving device 100 may include more or fewer subsystems, and each subsystem may include a plurality of elements. Examples are not described herein one by one. In addition, each subsystem and element of the intelligent driving device 100 may be interconnected in a wired or wireless manner.

The following describes a function of each subsystem in the intelligent driving device 100.

(1) Traveling system 102

The traveling system 102 may include a component that provides power for the intelligent driving device 100 to move. In some embodiments, the traveling system 102 may include an engine 118, an energy source 119, a transmission apparatus 120, and wheels/tires 121.

The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may also provide energy for another system of the intelligent driving device 100.

The transmission apparatus 120 may transmit mechanical power from the engine 118 to the wheels 121. The transmission apparatus 120 may include a gearbox, a differential, and a drive shaft. In some embodiments, the transmission apparatus 120 may further include another component, for example, a clutch. The drive shaft may include one or more shafts that may be coupled to one or more wheels 121.

(2) Sensing system 104

The sensing system 104 may include several sensors that sense information about an ambient environment of the intelligent driving device 100. For example, the sensing system 104 may include a positioning system 122 (the positioning system may be a global positioning system (global positioning system, GPS), or may be a BeiDou system or another positioning system), an inertial measurement unit (inertial measurement unit, IMU) 124, a radar sensor 126 (the radar sensor may be a lidar, or may be a millimeter-wave radar or an ultrasonic radar), a laser rangefinder 128, and an image sensor 130 (the image sensor may be a camera, or may be an infrared sensor). The sensing system 104 may further include a sensor (for example, an in-vehicle air quality monitor, a fuel gauge, or an engine oil thermometer) of an internal system of the monitored intelligent driving device 100. Sensor data from one or more of these sensors can be used to detect an object and corresponding features (a location, a shape, a direction, a speed, and the like) of the object. Such detection and recognition are key functions of a safe operation of the intelligent driving device 100.

The positioning system 122 may be configured to estimate a geographical location of the intelligent driving device 100. The IMU 124 is configured to sense location and orientation changes of the intelligent driving device 100 based on an inertial acceleration. In some embodiments, the IMU 124 may be a combination of an accelerometer and a gyroscope.

The radar sensor 126 may sense an object in the ambient environment of the intelligent driving device 100 through a radio signal. In some embodiments, in addition to sensing the object, the radar sensor 126 may be configured to sense a speed and/or an advancing direction of the object.

The laser rangefinder 128 may sense, through a laser, an object in the environment of the intelligent driving device 100. In some embodiments, the laser rangefinder 128 may include one or more laser sources, a laser scanner, one or more detectors, and another system component.

The image sensor 130 may be configured to capture a plurality of images of the ambient environment of the intelligent driving device 100. The image sensor 130 may be a static camera or a video camera. There may be one or more image sensors 130.

(3) Control system 106

The control system 106 controls operations of the intelligent driving device 100 and components of the intelligent driving device 100. The control system 106 may include various elements, for example, include a steering system 132, an accelerator 134, a brake unit 136, a fusion algorithm unit 138, a computer vision system 140, a route control system 142, and an obstacle avoidance system 144.

The steering system 132 may adjust an advancing direction of the intelligent driving device 100. In some embodiments, the steering system 132 may be a steering wheel system.

The accelerator 134 is configured to control an operating speed of the engine 118 and further control a speed of the intelligent driving device 100.

The brake unit 136 is configured to control the intelligent driving device 100 to decelerate. The brake unit 136 may use friction to slow down the wheels 121. In another embodiment, the brake unit 136 may convert kinetic energy of the wheels 121 into a current. Alternatively, the brake unit 136 may reduce a rotational speed of the wheels 121 in another form to control the speed of the intelligent driving device 100.

The fusion algorithm unit 138 is configured to aggregate data obtained by a plurality of sensors in the sensing system 104 for comprehensive analysis, to describe an external environment more accurately and reliably. This improves traveling safety of the intelligent driving device.

The computer vision system 140 may process and analyze an image captured by the image sensor 130 to recognize an object and/or a feature in the ambient environment of the intelligent driving device 100, and/or process and analyze data information captured by the radar sensor 126. The object and/or feature may include a traffic signal, a road boundary, and an obstacle. The computer vision system 140 may use an object recognition algorithm, a structure from motion (structure from motion, SFM) algorithm, video tracking, and other computer vision technologies. In some embodiments, the computer vision system 140 may be configured to: draw a map for an environment, track an object, estimate a speed of the object, and the like.

The route control system 142 is configured to determine a traveling route of the intelligent driving device 100. In some embodiments, the route control system 142 may determine the traveling route of the intelligent driving device 100 with reference to data from the sensing system 104 and one or more predetermined maps.

The obstacle avoidance system 144 is configured to recognize, evaluate, and avoid or bypass, in another manner, a potential obstacle in the environment of the intelligent driving device 100.

Certainly, in some instances, the control system 106 may add or alternatively include components in addition to those shown and described. Alternatively, the control system 106 may not include some of the foregoing components. Examples are not described herein again one by one.

(4) Peripheral device

The intelligent driving device 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the intelligent driving device 100 to interact with the user interface 116. For example, the vehicle-mounted computer 148 may provide information for the user of the intelligent driving device 100. The user interface 116 may further operate the vehicle-mounted computer 148 to receive a user input. The vehicle-mounted computer 148 may perform operations through a touchscreen. In another case, the peripheral device 108 may provide a means for the intelligent driving device 100 to communicate with another device located in the vehicle. For example, the microphone 150 may receive audio (for example, a voice command or another audio input) from the user of the intelligent driving device 100. Similarly, the speaker 152 may output audio to the user of the intelligent driving device 100.

The wireless communication system 146 may wirelessly communicate with one or more devices directly or through a communication network. For example, the wireless communication system 146 may use 3rd-generation (3rd-generation, 3G) cellular communication such as code division multiple access (code division multiple access, CDMA), a global system for mobile communications (global system for mobile communications, GSM), a general packet radio service (general packet radio service, GPRS), or 4G cellular communication such as long term evolution (long term evolution, LTE), or 5G cellular communication. The wireless communication system 146 may communicate with a wireless local area network (wireless local area network, WLAN) through wireless fidelity (wireless fidelity, Wi-Fi). In some embodiments, the wireless communication system 146 may directly communicate with a device through an infrared link, Bluetooth, or ZigBee. The wireless communication system 146 may include one or more dedicated short-range communication (dedicated short-range communication, DSRC) devices, and these devices may include public and/or private data communication between the vehicles and/or roadside stations.

(5) Power supply 110

The power supply 110 may supply power to various components of the intelligent driving device 100. In some embodiments, the power supply 110 may be a rechargeable lithium-ion or lead-acid battery. One or more battery packs of the battery may be configured as a power supply to supply power to the various components of the intelligent driving device 100. In some embodiments, the power supply 110 and the energy source 119 may be implemented together.

(6) Computer system 112

Some or all of functions of the intelligent driving device 100 are controlled by the computer system 112. The computer system 112 may include at least one processor 113. The processor 113 executes instructions 115 stored in a non-transitory computer-readable medium like a memory 114. The computer system 112 may alternatively be a plurality of computing devices that control an individual component or a subsystem of the intelligent driving device 100 in a distributed manner.

The processor 113 may be any conventional processor, for example, a central processing unit (central processing unit, CPU). Optionally, the processor may be, for example, an application-specific integrated circuit (application-specific integrated circuit, ASIC) or another hardware-based processor.

In some embodiments, the memory 114 may include the instructions 115 (for example, program logic), and the instructions 115 may be executed by the processor 113 to perform various functions of the intelligent driving device 100, including the functions described above. The memory 114 may also include additional instructions, including instructions used to send data to, receive data from, interact with, and/or control one or more of the traveling system 102, the sensing system 104, the control system 106, and the peripheral device 108.

In addition to the instructions 115, the memory 114 may store data, for example, point cloud data, image data, and other information. Such information may be used by the computer system 112 during an operation of the intelligent driving device 100 in an autonomous, semi-autonomous, and/or manual mode.

(7) User interface 116

The user interface 116 is used to provide information for or receive information from the user of the intelligent driving device 100. Optionally, the user interface 116 may include one or more input/output devices in a set of peripheral devices 108, for example, the wireless communication system 146, the vehicle-mounted computer 148, the microphone 150, and the speaker 152.

Based on functions of the various subsystems, the computer system 112 may control the functions of the intelligent driving device 100 based on input information received from the various subsystems and the user interface 116. For example, the computer system 112 may control the steering system 132 based on input information from the control system 106 to avoid an obstacle detected by the sensing system 104 and the obstacle avoidance system 144.

Optionally, one or more of the foregoing components may be installed separately from or associated with the intelligent driving device 100. For example, the memory 114 may be partially or completely separated from the intelligent driving device 100. The foregoing components may be communicatively coupled together in a wired and/or wireless manner.

Optionally, the foregoing components are merely examples. In actual application, components in the foregoing modules may be added or deleted according to an actual requirement. FIG. 1 should not be understood as a limitation on embodiments of this application.

The intelligent driving device 100 may include a transportation tool on a road, a transportation tool on water, an air transportation tool, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in this application. For another example, the intelligent driving device may be a transportation tool like an airplane or a ship.

It may be understood that a structure of the intelligent driving device in FIG. 1 is merely an example implementation. The intelligent driving device in embodiments of this application includes but is not limited to the foregoing structure.

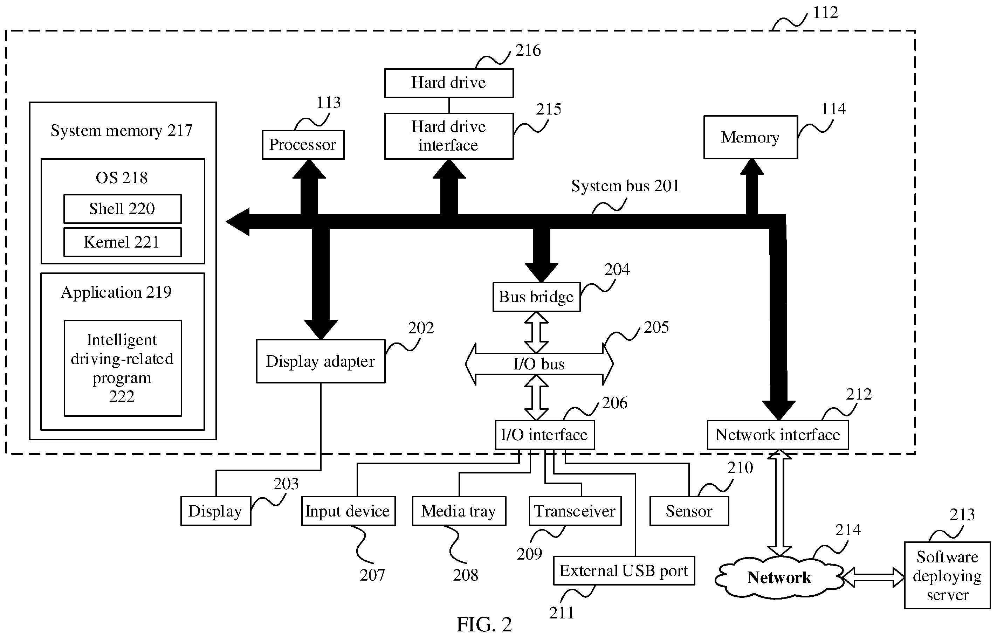

FIG. 2 is a diagram of an internal structure of the computer system 112 shown in FIG. 1 according to an embodiment of this application.

As shown in FIG. 2, the computer system 112 may include the processor 113, and the processor 113 is coupled to a system bus 201. The processor 113 may be one or more processors, and each processor may include one or more processor cores.

The processor 113 may be any conventional processor, including a reduced instruction set computer (reduced instruction set computer, RISC), a complex instruction set computer (complex instruction set computer, CISC), or a combination of the foregoing. Optionally, the processor may be an application-specific integrated circuit (application-specific integrated circuit, ASIC). Optionally, the processor 113 may be a neural-network processor or a combination of the neural-network processor and the foregoing conventional processor.

Optionally, in various embodiments described herein, the computer system 112 may be located far away from an intelligent driving device, and may wirelessly communicate with the intelligent driving device. In other aspects, some of the processes described herein are performed by a processor disposed in the intelligent driving device, and others are performed by a remote processor.

As shown in FIG. 2, the computer system 112 may further include the memory 114, and the memory 114 is coupled to the system bus 201. The memory 114 is configured to store information, for example, the instructions 115 in FIG. 1. The instructions 115 may be used to implement the platoon control method provided in embodiments of this application.

As shown in FIG. 2, the computer system 112 may further include a display adapter (display adapter) 202, the display adapter 202 may drive a display 203, and the display adapter 202 is coupled to the system bus 201.

As shown in FIG. 2, the system bus 201 may be further coupled to an input/output (input/output, I/O) bus 205 through a bus bridge 204. The I/O bus 205 is coupled to an I/O interface 206. The I/O interface 206 communicates with a plurality of I/O devices. For example, the plurality of I/O devices include an input device 207 (for example, a keyboard, a mouse, or a touchscreen), a media tray (media tray) 208 (for example, a compact disc read-only memory (compact disc read-only memory, CD-ROM), or a multimedia interface), a transceiver 209 (which may send and/or receive a radio communication signal), a sensor 210 (which may be any sensor in the sensing system 104 in FIG. 1), an external universal serial bus (universal serial bus, USB) port 211, and the like.

In addition, as shown in FIG. 2, the computer system 112 may further include a network interface 212, and the computer system 112 communicates with a software deploying server 213 through the network interface 212. The network interface 212 is a hardware network interface like a network interface card. A network 214 between the network interface 212 and the software deploying server 213 may be an external network, for example, the Internet, or may be an internal network, for example, Ethernet or a virtual private network (virtual private network, VPN). Optionally, the network 214 may alternatively be a wireless network, for example, a Wireless Fidelity (wireless fidelity, Wi-Fi) network or a cellular network.

In addition, as shown in FIG. 2, the computer system 112 may further include a hard drive interface 215, where the hard drive interface 215 is coupled to the system bus 201. The hard drive interface 215 is connected to a hard drive 216.

In addition, as shown in FIG. 2, the computer system 112 may further include a system memory 217, where the system memory 217 is coupled to the system bus 201. Data running in the system memory 217 may include an operating system (operating system, OS) 218 and an application 219 of the computer system 112.

The operating system 217 includes a shell (shell) 220 and a kernel (kernel) 221. The shell 220 is an interface between a user and the kernel of the operating system. The shell 220 manages interaction between the user and the operating system, for example, waiting for a user input, interpreting the user input to the operating system, and processing various output results of the operating system.

The kernel 221 includes those parts of the operating system that are used for managing memories, files, peripherals, and system resources. The kernel 221 directly interacts with hardware. The kernel 221 usually runs a process, provides communication between processes, and provides central processing unit (central processing unit, CPU) time slice management, interruption, memory management, I/O management, and the like.

The application 219 includes a program 222 related to intelligent driving control of the intelligent driving device, for example, a program for managing interaction between the intelligent driving vehicle and an obstacle on a road, a program for controlling a route or a speed of an automatic intelligent vehicle, and a program for controlling interaction between the intelligent driving vehicle and another intelligent driving vehicle on the road.

The application 219 may alternatively exist on a system of the software deploying server (deploying server) 213. For example, when the intelligent driving-related program 222 needs to be executed, the computer system 112 may download the intelligent driving-related program 222 from the software deploying server 213.

It may be understood that the computer system 112 of the intelligent driving device in FIG. 2 is merely an example implementation. The computer system 112 used in the intelligent driving device in embodiments of this application includes but is not limited to the foregoing structure.

A plurality of intelligent driving devices shown in FIG. 1 and FIG. 2 may form a platoon, and travel in a platoon form.

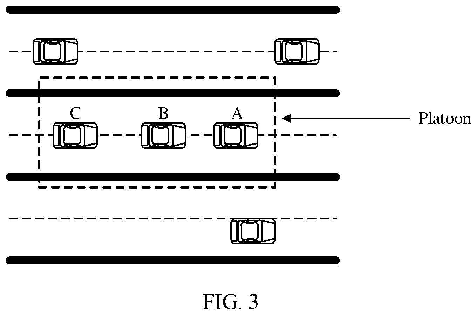

FIG. 3 is a diagram of a platoon according to an embodiment of this application. As shown in FIG. 3, the platoon includes a plurality of movable objects, which are respectively marked as A, B, and C in FIG. 3. Each of the plurality of movable objects may be, for example, the intelligent driving device shown in FIG. 1. In FIG. 3, three intelligent driving vehicles are used as an example for description.

In addition, any two of the plurality of movable objects may communicate with each other to exchange data, so that the plurality of movable objects travel in a platoon form. As shown in FIG. 3, in the three intelligent driving vehicles, an intelligent driving vehicle A is used as a leader (or a leader vehicle) in the platoon, and the other two intelligent driving vehicles are used as followers (or following vehicles) in the platoon.

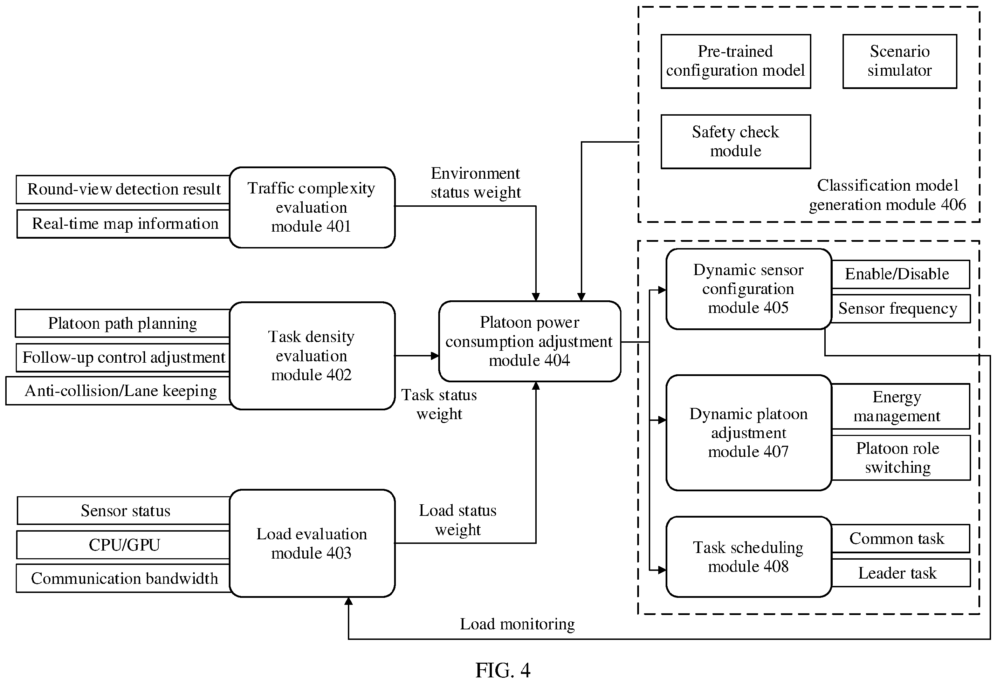

To implement the platoon control method provided in embodiments of this application, an embodiment of this application further provides a platoon control system. FIG. 4 is a diagram of an architecture of a platoon control system according to an embodiment of this application. As shown in FIG. 4, the platoon control system includes a traffic complexity evaluation module 401, a task density evaluation module 402, a load evaluation module 403, a platoon power consumption adjustment module 404, and a dynamic sensor configuration module 405.

The traffic complexity evaluation module 401 is configured to: evaluate a complexity degree of an ambient environment status of a movable object, and determine, based on the evaluated complexity degree of the ambient environment, an environment status weight corresponding to the environment status. In some embodiments, as shown in FIG. 4, the traffic complexity evaluation module 401 may evaluate a complexity degree of the ambient environment status of the movable object based on a round-view detection result of the movable object and real-time high-definition map information. A specific implementation is described in detail in a subsequent embodiment. For example, the round-view detection result of the movable object may include a density of obstacles in an ambient environment of the movable object. The round-view detection result may be determined based on image data and/or point cloud data collected by the movable object.

A more complex ambient environment of the platoon indicates that the platoon needs to process more tasks to cope with the complex environment, and correspondingly, power consumption of the platoon is higher. Therefore, a complexity degree of the ambient environment of the movable object in the platoon greatly affects overall power consumption of the platoon. In view of this, to flexibly adjust power consumption of the platoon, the traffic complexity evaluation module 401 may be deployed on each movable object, for example, to evaluate a complexity degree of an ambient environment of each movable object. Optionally, it is considered that an ambient environment of a follower in a platoon has large impact on the platoon. For the platoon shown in FIG. 3, the traffic complexity evaluation module 401 may be deployed, for example, on each follower in the platoon, and no traffic complexity evaluation module 401 is deployed on the leader in the platoon.

The task density evaluation module 402 is configured to: evaluate a complexity degree of a task currently executed by the leader in the platoon, and determine, based on the evaluated complexity degree of the task, a task status weight corresponding to a task status. In some embodiments, the task density evaluation module 402 may evaluate a complexity degree of a task based on a quantity of tasks in a currently executed task queue (or a length of the task queue). A specific implementation is described in detail in a subsequent embodiment. As shown in FIG. 4, an example of a task in the task queue includes a platoon path planning task, a follow-up control adjustment task, an anti-collision/lane keeping task, and the like.

As a computing center of the entire platoon, the leader in the platoon needs to process a large quantity of tasks. Therefore, a complexity degree of a task currently executed by the leader in the platoon greatly affects overall power consumption of the platoon. In view of this, to flexibly adjust power consumption of the platoon, the task density evaluation module 402 is deployed on the leader of the platoon, to evaluate a complexity degree of the task currently executed by the leader.

The load evaluation module 403 is configured to: evaluate a complexity degree of load of a movable object, and determine, based on the evaluated complexity degree of the load, a load status weight corresponding to a load status. In some embodiments, as shown in FIG. 4, a load degree of the load may be determined based on a sensor status on the movable object, for example, information such as sensor power consumption and a temperature, and data such as usage of a graphics processing unit (graphics processing unit, GPU) or a CPU on the movable object, memory usage, and communication bandwidth usage. A specific implementation is described in detail in a subsequent embodiment.

A complexity degree of load of each movable object in the platoon directly affects current power consumption of the movable object. In view of this, for the platoon shown in FIG. 3, the load evaluation module 403 may be deployed, for example, on each movable object, to evaluate the complexity degree of the load of each movable object.

The platoon power consumption adjustment module 404 is configured to determine a target sensor configuration for the platoon based on the environment status weight determined by the traffic complexity evaluation module 401, the task status weight determined by the task density evaluation module 402, and the load status weight determined by the load evaluation module 403. The target sensor configuration includes an operating frequency of a sensor on each of at least one movable object in the platoon.

The target sensor configuration may include, for example, sensor operating frequency information of each movable object in all movable objects in the platoon. Optionally, sensor operating frequency information of each movable object in some movable objects in the platoon may alternatively be included. Sensor operating frequency information of any movable object may include, for example, an operating frequency of each sensor deployed on the movable object, and optionally, may alternatively include operating frequencies of some sensors deployed on the movable object. In addition, in embodiments of this application, a sensor for adjusting an operating frequency is a configurable sensor deployed on a movable object (that is, the operating frequency can be adjusted). A non-configurable sensor deployed on the movable object (that is, the operating frequency cannot be adjusted) is not considered in the platoon control method provided in embodiments of this application.

In a scenario in which the movable object is an intelligent driving vehicle, for example, the configurable sensor may include a front mid-range camera, a front short-range camera, a front long-range camera, a rear-view camera, a top-view camera, a front millimeter-wave radar, a rear millimeter-wave radar, a side millimeter-wave radar, and the like of a following vehicle. Optionally, a range of the configurable sensor may be further modified based on intelligent driving vehicles of different vehicle models.

For example, the platoon power consumption adjustment module 404 may be deployed on any movable object in the platoon. Optionally, because power consumption of the leader in the platoon is high, the platoon power consumption adjustment module 404 may be deployed on any follower in the platoon, to avoid excessively high power consumption of the leader.

The dynamic sensor configuration module 405 is configured to adjust an operating frequency of a sensor on at least one movable object based on the target sensor configuration determined by the platoon power consumption adjustment module 404. In this way, a technical solution of dynamically adjusting an operating frequency of a sensor of a movable object in a platoon provided in embodiments of this application is implemented, to flexibly adjust power consumption of the platoon.

For example, as shown in FIG. 4, the dynamic sensor configuration module 405 may turn off a sensor of a movable object (that is, set an operating frequency to 0) based on the target sensor configuration, or turn on a sensor of a movable object (that is, set an operating frequency to an initial operating frequency), or adjust an operating frequency of a sensor of a movable object.

For example, the dynamic sensor configuration module 405 may be configured on each movable object in the platoon, to adjust an operating frequency of a sensor of any movable object in the platoon. Optionally, in a platoon traveling process, a sensor of the leader is usually fully turned on and works at a maximum frequency, to ensure safe traveling of the platoon. In view of this, the dynamic sensor configuration module 405 may be configured on each follower in the platoon, to adjust an operating frequency of a sensor of any follower in the platoon.

In addition, as shown in FIG. 4, the platoon control system may further include, for example, a classification model generation module 406. The classification model generation module 406 is configured to pre-train a classification model, so that the platoon power consumption adjustment module 404 outputs the target sensor configuration based on the obtained three weights through the trained classification model. A specific implementation is described in detail in a subsequent embodiment.

In some embodiments, the classification model generation module 406 includes a pre-training configuration model, a scenario simulator, a safety check module, and the like, to pre-train the classification model through these modules. A detailed implementation of the classification model generation module 406 is described in detail in a subsequent embodiment.

The classification model generation module 406 may be deployed on any movable object in the platoon. Optionally, the classification model generation module 406 may be deployed on a remote server, to reduce unnecessary data calculation for the platoon, and reduce power consumption of the platoon.

In addition, as shown in FIG. 4, the platoon control system may further include, for example, a dynamic platoon adjustment module 407. The dynamic platoon adjustment module 407 is configured to: adjust a role of each movable object in the platoon, for example, adjust an original leader to a follower, and adjust one of the original followers to a leader, to complete platoon role switching.

In some embodiments, the dynamic platoon adjustment module 407 may determine, based on an energy efficiency ratio of the platoon, whether a platoon role needs to be switched, to manage energy of the platoon. A specific implementation is described in detail in a subsequent embodiment.

For example, the dynamic platoon adjustment module 407 and the platoon power consumption adjustment module 404 may be integrated on a same movable object. Optionally, the dynamic platoon adjustment module 407 may be deployed on, for example, any movable object. This is not limited in embodiments of this application.

In addition, as shown in FIG. 4, the platoon control system may further include, for example, a task scheduling module 408. The task scheduling module is configured to: determine a task to be executed by each movable object in the platoon, and deliver the task to the corresponding movable object.

For example, the task scheduling module 408 is deployed on the leader in the platoon, so that the leader determines a task to be executed by each follower in the platoon, and controls the follower to execute the corresponding task. The leader further determines a leader task to be executed by the leader, and controls the leader to execute the leader task. In some embodiments, tasks to be executed by all followers in the platoon are usually the same. Therefore, as shown in FIG. 4, the task may also be referred to as a common task. The common task may be, for example, collecting statistics on power consumption of the entire platoon, monitoring a communication status of the entire platoon, and the like.

The modules in the platoon control system shown in FIG. 4 are used as examples for description. The platoon control module provided in embodiments of this application may optionally include more or fewer modules. Examples are not described herein one by one.

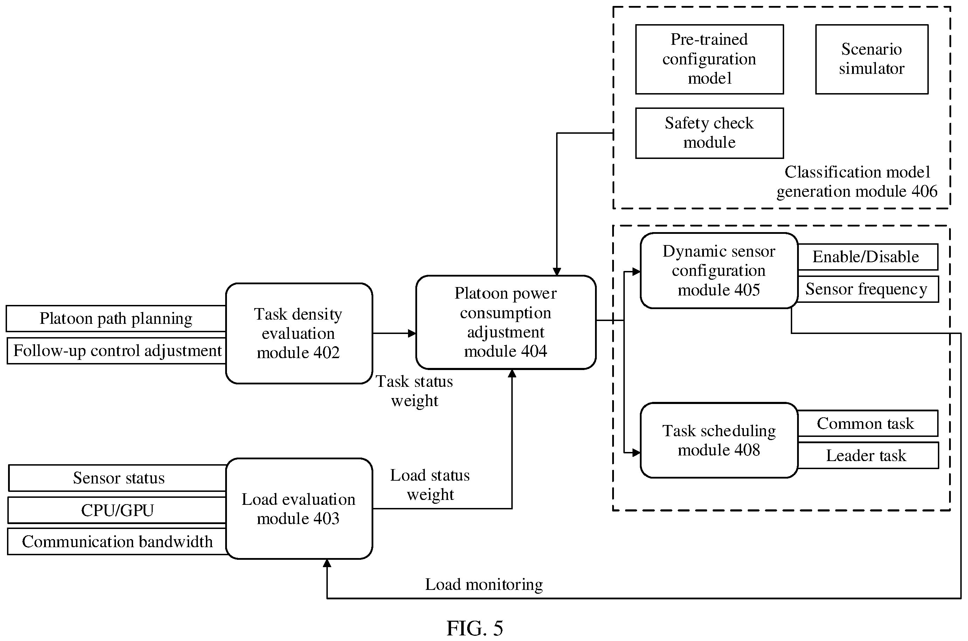

FIG. 5 shows another platoon control system according to an embodiment of this application. In comparison with the platoon control system shown in FIG. 4, the platoon control system shown in FIG. 5 may not include the traffic complexity evaluation module 401 and the dynamic platoon adjustment module 407. For functions of modules shown in FIG. 5, refer to functions of the corresponding modules in FIG. 4. Details are not described herein again.

The platoon control system shown in FIG. 5 may be used in a scenario in which an ambient environment of a platoon is simple and stable, for example, an unmanned mining area scenario. In these scenarios, the ambient environment of the platoon does not change greatly and has little impact on overall power consumption of the platoon. Therefore, the ambient environment of the platoon does not need to be considered. Therefore, in these scenarios, the traffic complexity evaluation module 401 may not be deployed in the platoon control system.

In addition, in the unmanned mining area scenario, because a lane for the platoon is narrow, roles of the movable objects in the platoon basically do not need to be switched in these scenarios. Therefore, in these scenarios, the dynamic platoon adjustment module 407 may not be deployed in the platoon control system.

The platoon control systems shown in FIG. 4 and FIG. 5 are used as examples for description, and do not constitute a limitation on the platoon control method provided in embodiments of this application. The platoon control method provided in embodiments of this application may further be applied to another type of platoon control system. Examples are not described herein one by one.

In addition, the modules in FIG. 4 and FIG. 5 are software modules. As shown in the foregoing content, these software modules may be deployed on each movable object in the platoon. In addition, deployment locations of the foregoing modules are used as examples for description. In embodiments of this application, different modules may be deployed on different movable objects based on a requirement.

Optionally, these software modules may alternatively be deployed on a remote server in a unified manner, and the remote server controls power consumption of the platoon in a unified manner. This is not limited in embodiments of this application.

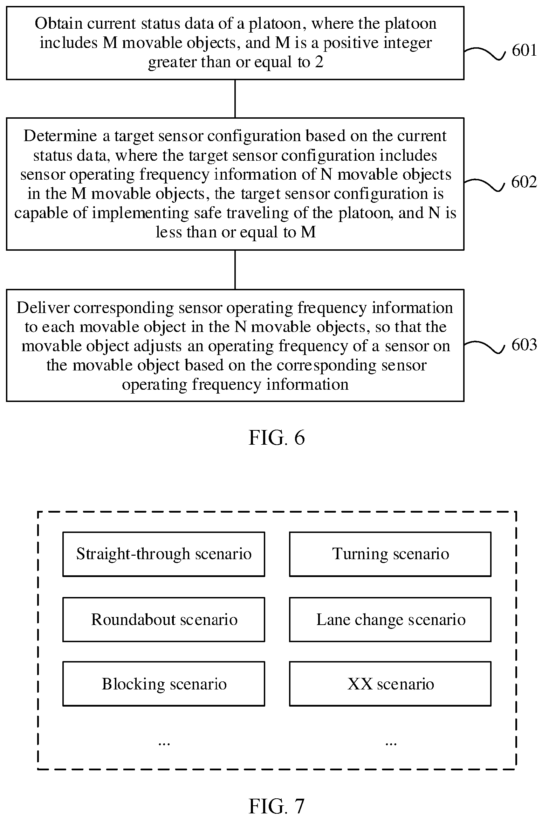

FIG. 6 is a flowchart of a platoon control method according to an embodiment of this application. As shown in FIG. 6, the method includes the following step 601 to step 603.

**Step 601:** Obtain current status data of a platoon, where the platoon includes M movable objects, and M is a positive integer greater than or equal to 2.

For example, the M movable objects may be the intelligent driving devices shown in FIG. 1, to implement platoon control in intelligent driving based on the method provided in this embodiment of this application.

The current status data may be understood as status data that affects current power consumption of the platoon.

For example, for a platoon formed by vehicles traveling on a road, an ambient environment status of the platoon has large impact on power consumption of the platoon. Therefore, current status data may include data corresponding to the ambient environment status of the platoon.

For another example, a quantity of tasks in a task queue executed by a leader in the platoon has large impact on the power consumption of the platoon. Therefore, the current status data may include data corresponding to a status of a task currently executed by the leader in the platoon.

For another example, load of each movable object in the platoon has large impact on the power consumption of the platoon. Therefore, the current status data may include data corresponding to a load status of each movable object in the platoon.

To facilitate subsequent adjustment of a sensor configuration of the platoon based on the current status data, a current status of the platoon may be quantized to obtain quantized current status data, so as to subsequently adjust the sensor configuration of the platoon based on the quantized current status data.

In view of this, in some embodiments, the current status data includes X status weights that are in a one-to-one correspondence with X statuses, each of the X status weights indicates a complexity degree of a corresponding status, and X is greater than or equal to 1.

For statuses in different dimensions of the platoon, a higher complexity degree of a status in each dimension indicates greater impact on the power consumption of the platoon. Therefore, the complexity degree of the status in each dimension may be quantized, to obtain a status weight of the status in each dimension. A larger status weight indicates a higher complexity degree of a corresponding status.

For example, the X statuses include one or more of an environment status, a task status, and a load status. A status weight corresponding to the environment status includes an environment status weight of at least one movable object in the platoon, the environment status weight indicates a complexity degree of an ambient environment status of the corresponding movable object, a status weight corresponding to the task status indicates a complexity degree of a task currently executed by the leader in the platoon, a status weight corresponding to the load status includes a load status weight of each movable object in the platoon, and the load status weight indicates a complexity degree of load of the corresponding movable object.

The complexity degree of the ambient environment status of the movable object may be represented by density of obstacles in an ambient environment of the movable object. Higher density of the obstacles in the ambient environment of the movable object indicates a higher complexity degree of the ambient environment status of the movable object. In view of this, in some implementations, the environment status weight of the movable object may be determined based on the density of the obstacles in the ambient environment of the movable object.

For example, a plurality of obstacle density intervals and environment status weights that are in a one-to-one correspondence with the plurality of obstacle density intervals are preset. When the density of the obstacles in the current ambient environment of the movable object is determined, the environment status weight of the movable object may be determined based on the determined density of the obstacles and the correspondence.

The density of the obstacles in the current ambient environment of the movable object may be determined based on a round-view detection result and real-time high-definition map information. In addition, the obstacles in the ambient environment include a pedestrian, another intelligent driving device other than the platoon, and the like.

In addition, the complexity degree of the task currently executed by the leader may be represented by a length of the task queue currently executed by the leader. A longer task queue currently executed by the leader indicates a higher complexity degree of the task currently executed by the leader. In view of this, in some implementations, a task status weight of the leader may be determined based on the length of the task queue currently executed by the leader.

The task status weight of the leader that is determined based on the length of the task queue currently executed by the leader may also be determined based on a preset correspondence. Details are not described herein again.

The length of the task queue currently executed by the leader may be a quantity of tasks included in the task queue.

In addition, the complexity degree of the load of the movable object may be represented by sensor power consumption, CPU or GPU usage, memory usage, and communication bandwidth usage of the movable object. Higher sensor power consumption, higher CPU or GPU usage, higher memory usage, and higher communication bandwidth usage of the movable object indicate a higher complexity degree of the load of the movable object. In view of this, in some implementations, the task status weight of the leader may be determined based on current sensor power consumption, current CPU or GPU usage, current memory usage, and current communication bandwidth usage of the movable object.

The task status weight of the leader that is determined based on the current sensor power consumption, the current CPU or GPU usage, the current memory usage, and the current communication bandwidth usage of the movable object may also be determined based on a preset correspondence. Details are not described herein again.

**Step 602:** Determine a target sensor configuration based on the current status data, where the target sensor configuration includes sensor operating frequency information of N movable objects in the M movable objects, the target sensor configuration is capable of implementing safe traveling of the platoon, and N is less than or equal to M.

In some embodiments, a plurality of candidate sensor configurations may be preset to improve platoon control efficiency. In this scenario, an implementation of step 602 may be: determining the target sensor configuration from the plurality of candidate sensor configurations based on the current status data.

The determining the target sensor configuration from the plurality of candidate sensor configurations based on the current status data may be implemented through a classification model. To be specific, the current status data is input into the classification model, so that the classification model outputs the target sensor configuration. The classification model is configured to: classify input data into one of the plurality of candidate sensor configurations and output a classification result.

The classification model may be any pre-trained model used for classification and outputting a classification result. For example, the classification model may include a minimum regression decision tree, another neural network model, or the like.

Optionally, in embodiments of this application, the target sensor configuration may be determined from the plurality of candidate sensor configurations without the classification model. In this scenario, a status data condition of each of the plurality of candidate sensor configurations may be preconfigured. If the current status data matches a status data condition of a candidate sensor configuration, the candidate sensor configuration is used as the target sensor configuration.

In a scenario in which the current status data includes the X status weights that are in a one-to-one correspondence with the X statuses, an example of the status data condition may be a plurality of status weight ranges.

Optionally, in some other embodiments, the plurality of candidate sensor configurations may not be preset, and when the current status data of the platoon is obtained, the target sensor configuration may be calculated according to a related algorithm.

In addition, in some embodiments, in a scenario in which the current status data includes the X status weights that are in a one-to-one correspondence with the X statuses, an implementation of step 602 may be: determining the target sensor configuration based on the X status weights.

For example, in a scenario in which the plurality of candidate sensor configurations are preconfigured, an implementation of determining the target sensor configuration based on the X status weights may be: determining the target sensor configuration from the plurality of candidate sensor configurations based on the X status weights.

For example, the X status weights are input into the classification model, so that the classification model outputs the target sensor configuration.

The plurality of candidate sensor configurations and the classification model are obtained through pre-training. This is described below.

1. Training the plurality of candidate sensor configurations

In some embodiments, an implementation of obtaining the plurality of candidate sensor configurations through training may be: determining a plurality of initial sensor configurations, where each of the plurality of initial sensor configurations includes an operating frequency of a sensor of each of the M movable objects; determining a safety degree of each of the plurality of initial sensor configurations, where the safety degree indicates a possibility that a simulated platoon is capable of safe traveling after being set based on the initial sensor configuration; and determining the plurality of candidate sensor configurations from the plurality of initial sensor configurations based on the safety degree of each of the plurality of initial sensor configurations.

In other words, the plurality of candidate sensor configurations are selected from the plurality of initial sensor configurations based on the possibility that the simulated platoon safely travels.

The simulated platoon may be a virtual platoon simulated by a computer. In this scenario, the safety degree of each initial sensor configuration is determined by simulating a possibility that the simulated platoon safely travels in a virtual scenario simulated by the computer. In this manner, the plurality of candidate sensor configurations can be quickly obtained through training.

In view of this, an implementation of determining the safety degree of each of the plurality of initial sensor configurations may be: for any of the plurality of initial sensor configurations, setting a sensor of each simulated object in the simulated platoon based on the initial sensor configuration, and causing the simulated platoon to travel in a scenario use case of each of a plurality of simulated scenarios; determining, based on a traveling condition of the simulated platoon in the scenario use case of each simulated scenario, a quantity of scenario use cases in which the simulated platoon is capable of safe traveling in the plurality of simulated scenarios; and determining a ratio of the quantity of scenario use cases in which safe traveling is available to a total quantity of scenario use cases of the plurality of simulated scenarios as the safety degree of the initial sensor configuration.

FIG. 7 is a diagram of a simulated scenario according to an embodiment of this application. As shown in FIG. 7, the simulated scenario may include a straight-through scenario, a turning scenario, a roundabout scenario, a lane change scenario, a blocking scenario, and the like.

In each simulated scenario, a situation of an ambient environment of the platoon may change in a plurality of ways, and tasks executed by movable objects in the platoon may also be different. Therefore, a large quantity of scenario use cases may be further set for each simulated scenario to accurately measure the safety degree of each initial sensor configuration. In different scenario use cases, ambient environments of the platoon are different, and/or in different scenario use cases, task sequences executed by a same movable object in the platoon are different. For example, for the straight-through scenario in FIG. 7, 500 scenario use cases may be set. In some scenario use cases, locations and/or quantities of pedestrians around the platoon are different. In some scenario use cases, platoon traveling lanes are different. In some scenario use cases, locations and/or quantities of vehicles around the platoon are different.

An implementation of determining whether the simulated platoon safely travels in a scenario use case may be: if no traffic rule violation event occurs to the simulated platoon in the scenario use case, determining that the simulated platoon can safely travel in the scenario use case, where a traffic rule violation event includes, for example, a speeding event, a collision event, a running-red-light event, and the like.

In addition, in the foregoing implementation of determining whether the simulated platoon safely travels in a scenario use case, in addition to considering whether the simulated platoon violates a traffic rule in the scenario use case, optionally, whether the simulated platoon exits an intelligent driving function in a traveling process of the scenario use case may be further considered. If no traffic rule violation event occurs to the simulated platoon in the scenario use case, and the simulated platoon does not exit the intelligent driving function in the entire traveling process of the scenario use case, it is determined that the simulated platoon can safely travel in the scenario use case.

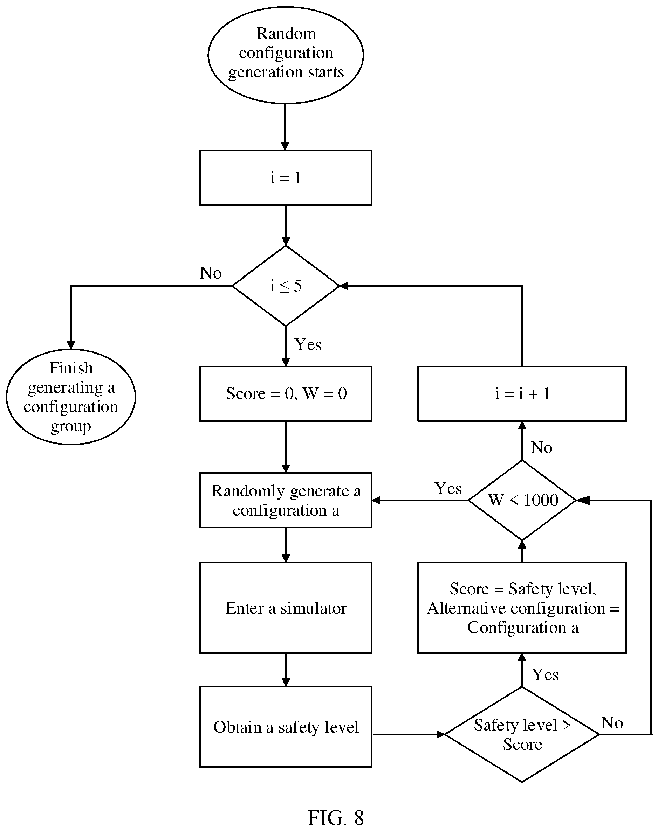

FIG. 8 is a schematic flowchart of obtaining a plurality of candidate sensor configurations through training according to an embodiment of this application. It is assumed that a quantity of a plurality of candidate sensor configurations that finally need to be trained is 5. As shown in FIG. 8, a training process is specifically as follows:

    1. Set i to 1.
    2. First, determine whether i is less than or equal to 5. If a determining result is yes, a score is set to 0, and W is set to 0.
    3. Generate an initial sensor configuration in a random manner. A generation manner may be: for a sensor on a movable object, a random frequency of the sensor is generated based on the following formula, and the random frequency is used as an operating frequency of the sensor in the initial sensor configuration generated this time.

$$fj = random \sim \left[ f_{j\min} + \frac{i*(f_{j\max} - f_{j\min})}{5}, f_{j\min} + \frac{(i+1)*(f_{j\max} - f_{j\min})}{5} \right]$$

Here, $f_{j\min}$ is a minimum supported frequency (which may be 0) of the sensor, $f_{j\max}$ is a maximum supported frequency of the sensor, and a value in the foregoing formula [] is a generation range of a random number.

A frequency is randomly generated for each configurable sensor in a platoon based on the above formula until a complete initial sensor configuration a is generated.

4. Input the initial sensor configuration a to a simulator, to adjust a sensor configuration of a simulated vehicle based on the initial sensor configuration a, and run a scenario use case in different simulated scenarios, where the scenario use case is preset by a system.

5. Run all scenario use cases to determine a safety degree of the initial sensor configuration a (namely, a percentage of passed scenario use cases). If the safety degree exceeds the score, assign the initial sensor configuration a to an alternative sensor configuration, and assign the safety degree determined this time to the score. Accordingly, if the safety degree does not exceed the score, do not use the initial sensor configuration a as an alternative, and do not update a value of the score. Then, determine whether W is less than 1000.

6. If W is less than 1000, return to step 3, and repeat step 3 to step 6 until W = 1000, and finally obtain a candidate sensor configuration an ith candidate sensor configuration. An initial sensor configuration a with a highest safety degree in 1000 cycles may be obtained through the 1000 cycles. Therefore, the initial sensor configuration a with a highest safety degree may be used as the ith candidate sensor configuration.

7. When W reaches 1000, increase a value of i by 1, and return to perform step 2 until five candidate sensor configurations are generated.

Based on the foregoing step 1 to step 7, one candidate sensor configuration may be obtained through each of five cyclic processes. In each cyclic process, 1000 initial sensor configurations are generated through cycles, and each initial sensor configuration is sent to the simulator to use an initial sensor configuration with a highest safety degree as a candidate sensor configuration obtained through training.

FIG. 8 is an example manner of obtaining the plurality of candidate sensor configurations through training. Optionally, step 3 to step 5 may alternatively be directly performed to obtain a safety degree of each initial sensor configuration in the 1000 initial sensor configurations, and then first five initial sensor configurations with highest safety degrees are directly selected as five candidate sensor configurations obtained through training.

Optionally, the simulated platoon may be another platoon that has completed a traveling task in addition to the platoon in step 601. In this scenario, the safety degree of each initial sensor configuration may be determined based on a possibility that the simulated platoon safely travels in various real scenarios before current time. In this manner, the plurality of candidate sensor configurations can be accurately obtained through training.

After the plurality of candidate sensor configurations are obtained through training, a safety level of each candidate sensor configuration in the plurality of candidate sensor configurations may be further set. For example, after five candidate sensor configurations are obtained, the five candidate sensor configurations are sorted in descending order of safety degrees, a safety level of a first candidate sensor configuration after sorting is set to 1, a safety level of a second candidate sensor configuration after sorting is set to 2, ..., and a safety level of a last candidate sensor configuration after sorting is set to 5. In other words, the safety level 1 is the highest safety level, and the safety level 5 is the lowest safety level.

In some scenarios, all sensors in the candidate sensor configuration corresponding to the safety level 1 are turned on, and all configurable sensors in the candidate sensor configuration corresponding to the safety level 5 are turned off or run at a low frequency.

In addition, after the plurality of candidate sensor configurations are obtained through training, the plurality of candidate sensor configurations may be further written into a sensor configuration file for subsequent use.

In some embodiments, pseudocode (in a JSON format) of the sensor configuration file may be represented as follows. The following code is described by using code of one sensor in the sensor configuration file as an example:

"Front_Radar": {"car_num": "A", "Status": "disable", "frequency": "10"}
Here, "Front_Radar" indicates a sensor name,
"car_num": "1" indicates a vehicle whose number is A in the platoon,
"Status": "disable" indicates that a status of a front radar sensor of the vehicle needs to be set to disable; and
"frequency": "10" indicates that an operating frequency of the sensor is 10 Hz when the status is set to enable.

2. Training a classification model

In some embodiments, the classification model includes a minimum regression decision tree. In this scenario, an implementation of training the classification model may be: obtaining a plurality of pieces of sample status data, where each piece of sample status data indicates one status of the simulated platoon; constructing an initialized minimum regression decision tree based on the plurality of pieces of sample status data, where the initialized minimum regression decision tree includes a plurality of initial classification results, a quantity of the plurality of initial classification results is the same as a quantity of the plurality of candidate sensor configurations, and different initial classification results indicate different status complexity degrees of the simulated platoon; and binding the plurality of initial classification results to the plurality of candidate sensor configurations one by one, to obtain the minimum regression decision tree, where a higher status complexity level indicated by one initial classification result in the plurality of initial classification results indicates a higher operating frequency of a sensor in a candidate sensor configuration bound to the corresponding initial classification result.

For example, each piece of sample status data may include a plurality of sample status weights. For explanations of the sample status weights, refer to related descriptions of the foregoing status weights. Details are not described herein again. For example, each piece of sample status data includes one environment status weight, one task status weight, and one load status weight.

In some embodiments, the plurality of pieces of sample status data may be obtained by analyzing a traveling process of the foregoing simulated platoon in each scenario use case of each of the plurality of simulated scenarios.

In addition, constructing the initialized minimum regression decision tree based on the plurality of pieces of sample status data is also referred to as a tree creation process. In some embodiments, the tree creation process may be implemented by using the following steps.

(a) Obtain a plurality of pieces of sample status data that includes three features: an environment status weight, a task status weight, and a load status weight. For ease of subsequent description, the environment status weight is marked as a feature 1, the task status weight is marked as a feature 2, and the load status weight is marked as a feature 3. The plurality of pieces of sample status data may be represented by using the following data set D:

$$D = (x1, y1, z1), (x2, y2, z2), (x3, y3, z3), ..., (xm, ym, zm).$$

.

(b) For the feature 1, first randomly obtain xj, and determine a split space R(j, s) corresponding to xj, where j is a corner mark of x, and s is an actual sample value of xj.

$$R1(j, s) = \{x|xj \leq s\} \text{ and } R2(j, s) = \{x|xj > s\}$$

(c) Solve an optimal split variable j and a split point s by using the following formula:

$$\min j, s[\min c1 \sum xi \in R1(j,s)(yi - c1)/2 + \min c2 \sum xi \in R2(j,s)(yi - c2)/2]$$

here, c1 and c2 are respectively average values of samples in which the feature 1 falls into a first split space and a second split space.

Specifically, a value of j is changed to traverse all samples of the feature 1, the optimal split variable j is found by using the foregoing formula, to form a pair of (j, s), and a numerical space corresponding to the feature 1 is divided into two areas accordingly. Then, the foregoing division process is repeated for each area until a condition is met. Finally, the numerical space corresponding to the feature 1 is divided into y regions: R1, R2, ..., and Ry, where y is greater than or equal to 2, to obtain a first layer of the decision tree.

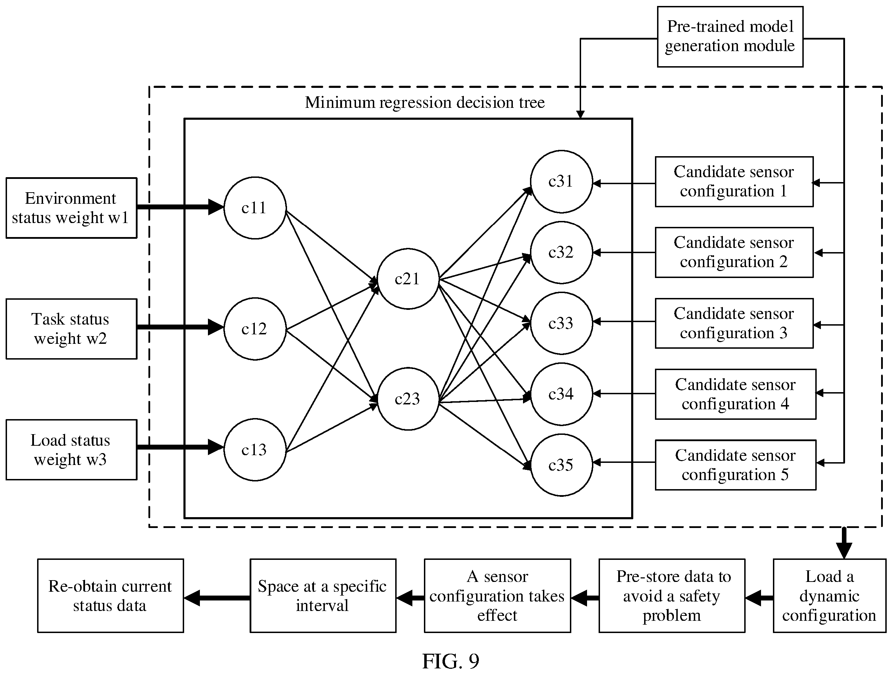

There are three features in the sample data. It is assumed that, as shown in FIG. 9, a feature 1 is split into three leaf nodes c11, c12, and c13, and the three leaf nodes respectively correspond to three spaces obtained after the feature 1 is split. Then, based on the three leaf nodes c11, c12, and c13 obtained after the feature 1 is split, a feature 2 is further split. As shown in FIG. 9, it is assumed that the feature 2 is split into two leaf nodes: c21 and c22, and the two leaf nodes respectively correspond to two spaces obtained after the feature 2 is split. Then, based on the spaces obtained after the feature 2 is split, a feature 3 is further split. As shown in FIG. 9, it is assumed that the feature 3 is split into five leaf nodes: c31, c32, c33, c34, and c35, and the five leaf nodes respectively correspond to five spaces obtained after the feature 3 is split. In this way, an initialized minimum regression decision tree whose depth is 3 shown in FIG. 9 may be constructed, where the five leaf nodes c31, c32, c33, c34, and c35 are five initial classification results.

As shown in FIG. 9, after the initialized minimum regression decision tree is obtained, the five initial classification results of the initialized minimum regression decision tree further need to be bound to the foregoing five candidate sensor configurations obtained through training, to use the candidate sensor configurations as final classification results.

As shown in FIG. 9, an initial classification result c31 is bound to a candidate sensor configuration 1, an initial classification result c32 is bound to a candidate sensor configuration 2, an initial classification result c33 is bound to a candidate sensor configuration 3, an initial classification result c34 is bound to a candidate sensor configuration 4, and an initial classification result c35 is bound to a candidate sensor configuration 5.

Different initial classification results indicate different status complexity degrees of the platoon. In view of this, when an initial classification result is bound to a candidate sensor configuration, a higher status complexity level indicated by one initial classification result in a plurality of initial classification results indicates a higher operating frequency of a sensor in the candidate sensor configuration bound to the corresponding initial classification result, namely, a higher safety level of the bound initial sensor configuration.

For example, in FIG. 9, the initial classification result c31 indicates that an ambient environment status, a status of a task executed by the leader, and a load status of each movable object are very complex. Therefore, the initial classification result c31 is bound to the candidate sensor configuration 1 with a highest safety level. The initial classification result c35 indicates that the ambient environment status, the status of the task executed by the leader, and the load status of each movable object are not very complex. Therefore, the initial classification result c35 is bound to the candidate sensor configuration 5 with a lowest safety level.

In addition, as shown in FIG. 9, the process of generating the minimum regression decision tree may be implemented through the classification model generation module shown in FIG. 4 or FIG. 5.

Based on the minimum regression decision tree shown in FIG. 9, when the current status data of the platoon is obtained in step 601, and the current status data includes an environment status weight w1, a task status weight w2, and a load status weight w3, the three status weights are input into the minimum regression decision tree, and the minimum regression decision tree outputs one candidate sensor configuration, namely, the target sensor configuration.

The foregoing minimum regression decision tree is an example of the classification model. Optionally, the current status data may be classified into one of the candidate sensor configurations through another neural network model. Examples are not described herein one by one.

**Step 603:** Deliver corresponding sensor operating frequency information to each movable object in the N movable objects, so that the movable object adjusts an operating frequency of a sensor on the movable object based on the corresponding sensor operating frequency information.

Because the target sensor configuration includes the sensor operating frequency information of the N movable objects in the M movable objects in the platoon, after the target sensor configuration is obtained in step 602, for each movable object in the N movable objects, the sensor operating frequency information of the movable object is delivered to the movable object, so that the movable object adjusts the operating frequency of the sensor of the movable object.

In some embodiments, a sensor frequency adjustment instruction may be generated based on sensor operating frequency information of any one of the N movable objects in the target sensor configuration, and may be delivered to the movable object. When receiving the sensor frequency adjustment instruction, the movable object may adjust an operating frequency of a corresponding sensor based on the sensor frequency adjustment instruction.

For example, the sensor frequency adjustment instruction may be: A frequency of a rear long-focus camera of a leader vehicle A is changed from 30 Hz to 10 Hz. The frequency adjustment instruction is delivered to an electronic control unit (electronic control unit, ECU) or a domain controller (domain controller) of the leader vehicle A through a communication network, so that the leader vehicle A controls the frequency of the rear long-focus camera of the leader vehicle A to change from 30 Hz to 10 Hz.

In addition, one sensor frequency adjustment instruction may be generated for each configurable sensor on the movable object. In this way, a plurality of sensor frequency adjustment instructions may be generated, and the plurality of sensor frequency adjustment instructions may be delivered to the movable object as an instruction sequence.

In addition, in some embodiments, to prevent a safety problem caused by loss of some sensor information in a sensor operating frequency switching process, after the movable object receives the sensor frequency adjustment instruction, the movable object may pre-store sensor data of time T (T = 10s) for an intelligent driving task in the sensor switching process, controls, based on the sensor frequency adjustment instruction, the sensor to adjust an operating frequency after prestoring ends, and checks whether a sensor status changes accordingly. If the sensor status does not change according to the sensor frequency adjustment instruction, a sensor fault log is reported. Otherwise, a frequency adjustment success log is reported.

In addition, when the movable object adjusts an operating frequency of a sensor of the movable object according to the sensor frequency adjustment instruction, the movable object may further adjust an algorithm corresponding to the sensor. The algorithm corresponding to the sensor may include, for example, a related algorithm deployed on a controller configured on the sensor. For example, an algorithm corresponding to a camera may include a target detection algorithm that is deployed on a controller and that is configured on the camera. For example, the algorithm corresponding to the sensor may further include an algorithm for a speed at which the movable object reads data from the sensor, where the algorithm for a speed at which the movable object reads data from the sensor may also be referred to as a callback function. The algorithms corresponding to the adjusted sensor are not described one by one herein.

For example, if the operating frequency of the sensor is adjusted to 0, that is, the sensor is disabled, an algorithm corresponding to the sensor may be correspondingly disabled. In this case, a standby (standby) mark may be added to the sensor in a program. For another example, if the operating frequency of the sensor is adjusted from 0 to a specific value, that is, the sensor is enabled, an algorithm corresponding to the sensor may be enabled. In this case, a mark of the sensor may be switched from a standby (standby) mark to an active (active) mark in a program. For another example, if the operating frequency of the sensor decreases, a frequency for reading data in the callback function may be correspondingly reduced.

After adjusting the operating frequency of the sensor and the corresponding algorithm, the movable object starts to obtain the current status data again after a specific interval (for example, three minutes), to perform a next adjustment process.

In conclusion, in embodiments of this application, an operating frequency of a sensor on a movable object in the platoon may be adjusted based on the current status data of the platoon, to flexibly adjust power consumption of the platoon based on the current status data, and avoid a problem of excessively high power consumption of the platoon in some scenarios.

It can be learned from the platoon control system shown in FIG. 4 that in embodiments of this application, a role in the platoon may be further switched, to further reduce power consumption of the platoon. The following provides explanations and descriptions.

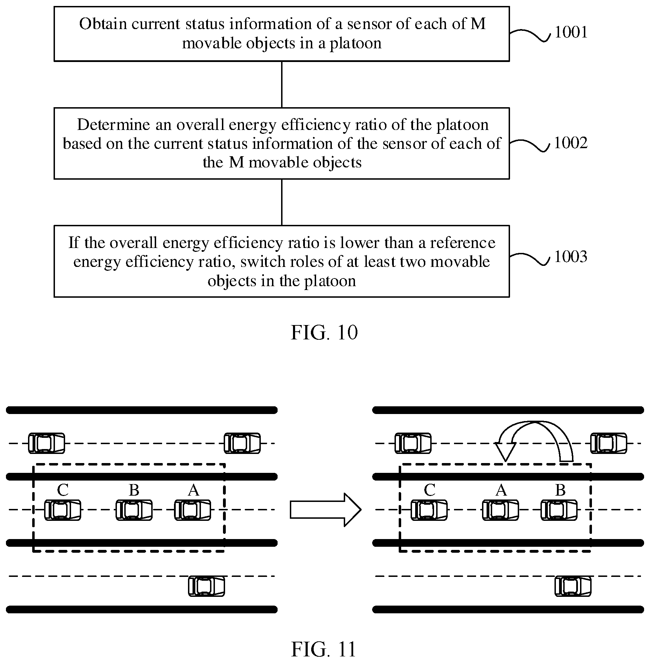

FIG. 10 is a schematic flowchart of switching a platoon role according to an embodiment of this application. As shown in FIG. 10, the method includes the following step 1001 to step 1003.

Step 1001: Obtain current status information of a sensor of each of M movable objects in a platoon.

The current status of the sensor may include information such as power, an operating frequency, a temperature, and the like of the sensor.

Step 1002: Determine an overall energy efficiency ratio of the platoon based on the current status information of the sensor of each of the M movable objects.

The overall energy efficiency ratio indicates an overall energy utilization degree of the platoon. A higher overall energy efficiency ratio indicates a higher overall energy utilization of the platoon. A lower overall energy efficiency ratio indicates a lower overall energy utilization of the platoon. In this case, the platoon role may be adjusted to improve an energy efficiency ratio and reduce power consumption.

In some embodiments, the overall energy efficiency ratio of the platoon may be determined by using the following formula:

$$W = \frac{\sum_{i=1}^{n} wi * Xi}{\sum_{i=1}^{n} wi}$$

Here, W is the overall energy efficiency ratio of the platoon, Xi is an energy efficiency ratio of a sensor on a movable object in the platoon, and wi is a weight of the sensor.

Here, Xi may be obtained based on information such as a frequency, a temperature, power, and the like of the sensor and a power characteristic curve of the sensor, wi is a preset weight, and for example, a weight of the sensor may be set based on an importance of the sensor in the platoon.

The above formula is used as an example to illustrate how to determine the overall energy efficiency ratio of the platoon. Optionally, the overall energy efficiency ratio of the platoon may alternatively be determined in another manner. Examples are not provided one by one for description herein.

Step 1003: If the overall energy efficiency ratio is lower than a reference energy efficiency ratio, switch roles of at least two movable objects in the platoon.

The reference energy efficiency ratio is a preset value, and if the overall energy efficiency ratio is lower than the reference energy efficiency ratio, it indicates that current power consumption of the platoon is high. For example, the reference energy efficiency ratio may be 60%.

The switching roles of at least two movable objects in the platoon may include: adjusting an original follower to a leader, adjusting an original leader to a follower, changing locations of two original followers in a lane, or the like.

FIG. 11 is a diagram of a scenario of switching a platoon role according to an embodiment of this application. As shown in FIG. 11, a vehicle A, a vehicle B, and a vehicle C form a platoon. Before adjustment, the vehicle A acts as a leader, and the vehicle B and the vehicle C act as followers. After the adjustment, the vehicle B acts as a leader, and the vehicle A and the vehicle C act as followers.

In some embodiments, if the overall energy efficiency ratio is lower than the reference energy efficiency ratio, the roles of the at least two movable objects in the platoon may be directly switched. Optionally, in a case in which the overall energy efficiency ratio is lower than the reference energy efficiency ratio, expected consumed power in a switching process may be further determined, where the switching process is a process of switching the roles of the at least two movable objects in the platoon; a power difference between power before switching and power after switching of the platoon may be further determined; and the roles of the at least two movable objects in the platoon may be further switched if the power difference exceeds the expected consumed power.

If the power difference exceeds the expected consumed power, it indicates that the switching process is less costly. In this case, switching the roles of the at least two movable objects in the platoon may be considered. Correspondingly, if the power difference is less than the expected consumed power, it indicates that the switching process is costly. In this case, switching the roles of the at least two movable objects in the platoon may not need to be considered, to avoid causing higher power consumption.

In some embodiments, an implementation of determining the expected consumed power in the switching process may be: determining at least one task that needs to be executed in the switching process; and determining the expected consumed power based on empirical power of each of the at least one task, where the empirical power indicates power required when the corresponding task is executed before current time. The empirical power may also be referred to as an empirical value of consumed power of the task.

For example, statistics may be collected on actual power of each task executed each time before the current time in different tasks such as a side impact detection task, a collaborative path planning task, and a control sequence execution task. Actual power distribution of any task may be determined based on processes of executing the task a plurality of times before current time. The actual power distribution of the task usually presents normal distribution (which may be represented by $\mu\sigma^2$). Actual average power of the task may be determined based on the actual power distribution of the task, and the actual average power may be used as empirical power of the task.

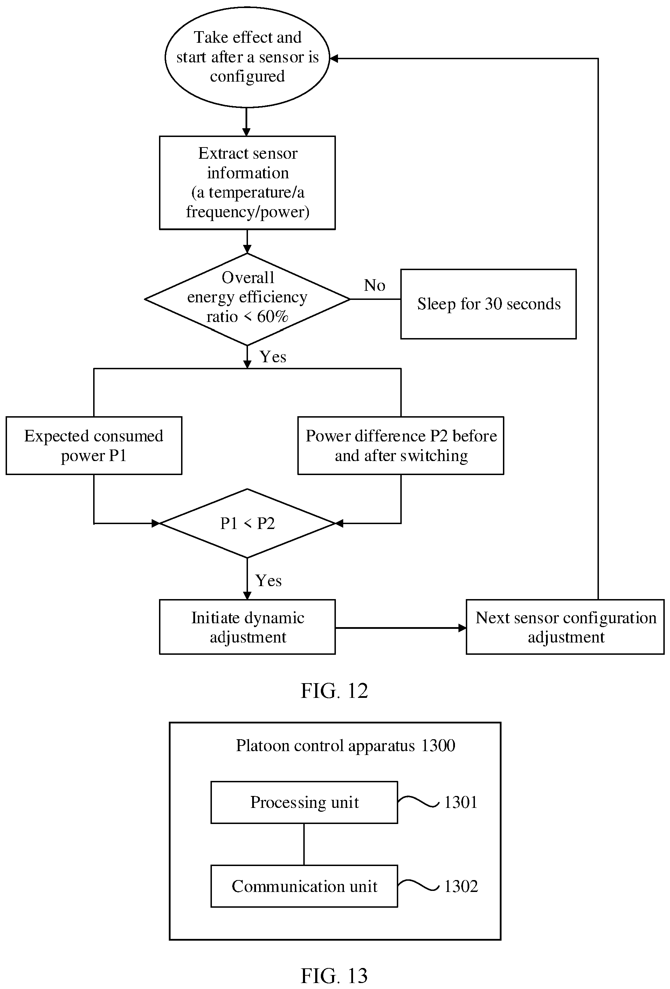

FIG. 12 is another schematic flowchart of switching a platoon role according to an embodiment of this application. As shown in FIG. 12, after each sensor in embodiments in FIG. 6 is successfully configured, current status information (for example, a temperature/a frequency/power) of each sensor of each movable object may be extracted. An overall energy efficiency ratio of a platoon is determined based on the current state information of each sensor of each movable object and a sensor power characteristic curve. It is determined whether the overall energy efficiency ratio of the platoon is lower than 60%, and if the overall energy efficiency ratio of the platoon exceeds 60%, the operation of extracting the current status information of each sensor of each movable object is re-executed after 30 seconds of sleep.

If the overall energy efficiency ratio of the platoon is lower than 60%, expected consumed power P1 in a switching process and a power difference P2 between power before switching and power after switching of the platoon are determined. If P1 is less than P2, a dynamic adjustment is initiated to adjust roles of at least two movable objects in the platoon.

In conclusion, in this embodiment of this application, a role of a movable object in the platoon may be further adjusted based on an energy efficiency ratio of the platoon, to further reduce power consumption of the platoon.

In addition, as shown in FIG. 13, an embodiment of this application further provides a platoon control apparatus 1300. The apparatus 1300 includes a processing unit 1301 and a communication unit 1302. Modules in the platoon control systems shown in FIG. 4 and FIG. 5 may be deployed in the processing unit 1301 or the communication unit 1302, to implement the platoon control method provided in embodiments of this application.

The processing unit 1301 is configured to obtain current status data of a platoon, where the platoon includes M movable objects, and M is a positive integer greater than or equal to 2. For a specific implementation, refer to step 601 in embodiments in FIG. 6.

The processing unit 1302 is further configured to determine a target sensor configuration based on the current status data, where the target sensor configuration includes sensor operating frequency information of N movable objects in the M movable objects, the target sensor configuration is capable of implementing safe traveling of the platoon, and N is less than or equal to M. For a specific implementation, refer to step 602 in embodiments in FIG. 6.

The communication unit 1302 is configured to deliver corresponding sensor operating frequency information to each movable object in the N movable objects, so that the movable object adjusts an operating frequency of a sensor on the movable object based on the corresponding sensor operating frequency information. For a specific implementation, refer to step 603 in embodiments in FIG. 6.

Optionally, when determining the target sensor configuration based on the current status data, the processing unit 1302 is configured to:

determine the target sensor configuration from a plurality of candidate sensor configurations based on the current status data.

Optionally, the processing unit 1302 is further configured to:

determine a plurality of initial sensor configurations, where each of the plurality of initial sensor configurations includes an operating frequency of a sensor of each of the M movable objects;
determine a safety degree of each of the plurality of initial sensor configurations, where the safety degree indicates a possibility that a simulated platoon is capable of safe traveling after being set based on the initial sensor configuration; and
determine the plurality of candidate sensor configurations from the plurality of initial sensor configurations based on the safety degree of each of the plurality of initial sensor configurations.

Optionally, when determining the safety degree of each of the plurality of initial sensor configurations, the processing unit 1302 is configured to:

for any of the plurality of initial sensor configurations, set a sensor of each simulated object in the simulated platoon based on the any initial sensor configuration, and cause the simulated platoon to travel in a scenario use case of each of a plurality of simulated scenarios;
determine, based on a traveling condition of the simulated platoon in the scenario use case of each simulated scenario, a quantity of scenario use cases in which the simulated platoon is capable of safe traveling in the plurality of simulated scenarios; and
determine a ratio of the quantity of scenario use cases in which safe traveling is available to a total quantity of scenario use cases of the plurality of simulated scenarios as a safety degree of the any initial sensor configuration.

Optionally, when determining the target sensor configuration from the plurality of candidate sensor configurations based on the current status data, the processing unit 1302 is configured to:

input the current status data into a classification model, so that the classification model outputs the target sensor configuration.

The classification model is configured to classify input data into one of the plurality of candidate sensor configurations and output a classification result.

Optionally, the classification model includes a minimum regression decision tree, and the processing unit 1302 is further configured to:

obtain a plurality of pieces of sample status data, where each piece of sample status data indicates one status of the simulated platoon;
construct an initialized minimum regression decision tree based on the plurality of pieces of sample status data, where the initialized minimum regression decision tree includes a plurality of initial classification results, a quantity of the plurality of initial classification results is the same as a quantity of the plurality of candidate sensor configurations, and different initial classification results indicate different status complexity degrees of the simulated platoon; and
bind the plurality of initial classification results to the plurality of candidate sensor configurations one by one, to obtain the minimum regression decision tree.

A higher status complexity level indicated by one initial classification result in the plurality of initial classification results indicates a higher operating frequency of a sensor in a candidate sensor configuration bound to the corresponding initial classification result.

Optionally, the current status data includes X status weights that are in a one-to-one correspondence with X statuses, each of the X status weights indicates a complexity degree of a corresponding status, and X is greater than or equal to 1.

When determining the target sensor configuration based on the current status data, the processing unit 1302 is configured to:
determine the target sensor configuration based on the X status weights.

Optionally, the X statuses include one or more of an environment status, a task status, and a load status.

A status weight corresponding to the environment status includes an environment status weight of at least one movable object in the platoon, the environment status weight indicates a complexity degree of an ambient environment status of the corresponding movable object, a status weight corresponding to the task status indicates a complexity degree of a task currently executed by the leader in the platoon, a status weight corresponding to the load status includes a load status weight of each movable object in the platoon, and the load status weight indicates a complexity degree of load of the corresponding movable object.

Optionally, the processing unit 1302 is further configured to:
obtain current status information of the sensor of each of the M movable objects. For a specific implementation, refer to step 1001 in embodiments in FIG. 10.

An overall energy efficiency ratio of the platoon is determined based on the current status information of the sensor of each of the M movable objects. For a specific implementation, refer to step 1002 in embodiments in FIG. 10.

If the overall energy efficiency ratio is lower than a reference energy efficiency ratio, roles of at least two movable objects in the platoon are switched. For a specific implementation, refer to step 1003 in embodiments in FIG. 10.

Optionally, when switching the roles of the at least two movable objects in the platoon if the overall energy efficiency ratio is lower than the reference energy efficiency ratio, the processing unit 1302 is configured to:

determine expected consumed power in a switching process if the overall energy efficiency ratio is lower than the reference energy efficiency ratio, where the switching process is a process of switching the roles of the at least two movable objects in the platoon;
determine a power difference between power before switching and power after switching of the platoon; and
switch the roles of the at least two movable objects in the platoon if the power difference exceeds the expected consumed power.

Optionally, when determining the expected consumed power in the switching process, the processing unit 1302 is configured to:

determine at least one task that needs to be executed in the switching process; and
determine the expected consumed power based on empirical power of each of the at least one task, where the empirical power indicates power required when the corresponding task is executed before current time.

In embodiments of this application, an operating frequency of a sensor on a movable object in the platoon may be adjusted based on the current status data of the platoon, to flexibly adjust power consumption of the platoon based on the current status data, and avoid a problem of excessively high power consumption of the platoon in some scenarios. In addition, after the operating frequency of the sensor in the platoon is adjusted, for example, the operating frequency of the sensor is lowered, data collected by the sensor is reduced, and correspondingly, data that needs to be processed in the platoon is also reduced. This saves computing resources of the platoon.

It should be noted that, when the platoon control apparatus provided in the foregoing embodiments controls the platoon, division of the function units is only used as an example for description. In actual application, the functions may be allocated to different function units for implementation, depending on a requirement. In other words, an internal structure of a device is divided into different function units to implement all or some of the functions described above. In addition, the platoon control apparatus provided in embodiments and the platoon control method embodiments pertain to a same concept. For a specific implementation process of the platoon control apparatus, refer to the method embodiments. Details are not described herein again.

A person of ordinary skill in the art may understand that all or some of the steps of embodiments may be implemented by hardware or a program instructing related hardware. The program may be stored in a computer-readable storage medium. The storage medium mentioned above may be a read-only memory, a magnetic disk, an optical disc, or the like.

The foregoing descriptions are merely example embodiments of this application, but are not intended to limit this application. Any modification, equivalent replacement, or improvement made within the scope and principle of this application should fall within the protection scope of this application.

**Claims**

1. A platoon control method, wherein the method comprises:

obtaining current status data of a platoon, wherein the platoon comprises M movable objects, and M is a positive integer greater than or equal to 2;

determining a target sensor configuration based on the current status data, wherein the target sensor configuration comprises sensor operating frequency information of N movable objects in the M movable objects, the target sensor configuration is capable of implementing safe traveling of the platoon, and N is less than or equal to M; and

delivering corresponding sensor operating frequency information to each movable object in the N movable objects, so that the movable object adjusts an operating frequency of a sensor on the movable object based on the corresponding sensor operating frequency information.

2. The method according to claim 1, wherein the determining a target sensor configuration based on the current status data comprises:

determining the target sensor configuration from a plurality of candidate sensor configurations based on the current status data.

3. The method according to claim 2, wherein the method further comprises:

determining a plurality of initial sensor configurations, wherein each of the plurality of initial sensor configurations comprises an operating frequency of a sensor of each of the M movable objects;

determining a safety degree of each of the plurality of initial sensor configurations, wherein the safety degree indicates a possibility that a simulated platoon is capable of safe traveling after being set based on the initial sensor configuration; and

determining the plurality of candidate sensor configurations from the plurality of initial sensor configurations based on the safety degree of each of the plurality of initial sensor configurations.

4. The method according to claim 3, wherein the determining a safety degree of each of the plurality of initial sensor configurations comprises:

for any of the plurality of initial sensor configurations, setting a sensor of each simulated object in the simulated platoon based on the any initial sensor configuration, and causing the simulated platoon to travel in a scenario use case of each of a plurality of simulated scenarios;

determining, based on a traveling condition of the simulated platoon in the scenario use case of each simulated scenario, a quantity of scenario use cases in which the simulated platoon is capable of safe traveling in the plurality of simulated scenarios; and

determining a ratio of the quantity of scenario use cases in which safe traveling is available to a total quantity of scenario use cases of the plurality of simulated scenarios as a safety degree of the any initial sensor configuration.

5. The method according to any one of claims 2 to 4, wherein the determining the target sensor configuration from a plurality of candidate sensor configurations based on the current status data comprises:

inputting the current status data into a classification model, so that the classification model outputs the target sensor configuration, wherein

the classification model is configured to: classify input data into one of the plurality of candidate sensor configurations and output a classification result.

6. The method according to claim 5, wherein the classification model comprises a minimum regression decision tree, and the method further comprises:

obtaining a plurality of pieces of sample status data, wherein each piece of sample status data indicates one status of the simulated platoon;

constructing an initialized minimum regression decision tree based on the plurality of pieces of sample status data, wherein the initialized minimum regression decision tree comprises a plurality of initial classification results, a quantity of the plurality of initial classification results is the same as a quantity of the plurality of candidate sensor configurations, and different initial classification results indicate different status complexity degrees of the simulated platoon; and

binding the plurality of initial classification results to the plurality of candidate sensor configurations one by one, to obtain the minimum regression decision tree, wherein

a higher status complexity level indicated by one initial classification result in the plurality of initial classification results indicates a higher operating frequency of a sensor in a candidate sensor configuration bound to the corresponding initial classification result.

7. The method according to any one of claims 1 to 6, wherein the current status data comprises X status weights that are in a one-to-one correspondence with X statuses, each of the X status weights indicates a complexity degree of a corresponding status, and X is greater than or equal to 1; and
the determining a target sensor configuration based on the current status data comprises:
determining the target sensor configuration based on the X status weights.

8. The method according to claim 7, wherein the X statuses comprise one or more of an environment status, a task status, and a load status, wherein
a status weight corresponding to the environment status comprises an environment status weight of at least one movable object in the platoon, the environment status weight indicates a complexity degree of an ambient environment status of the corresponding movable object, a status weight corresponding to the task status indicates a complexity degree of a task currently executed by a leader in the platoon, a status weight corresponding to the load status comprises a load status weight of each movable object in the platoon, and the load status weight indicates a complexity degree of load of the corresponding movable object.

9. The method according to any one of claims 1 to 8, wherein the method further comprises:

   obtaining current status information of the sensor of each of the M movable objects;
   determining an overall energy efficiency ratio of the platoon based on the current status information of the sensor of each of the M movable objects; and
   switching roles of at least two movable objects in the platoon if the overall energy efficiency ratio is lower than a reference energy efficiency ratio.

10. The method according to claim 9, wherein the switching roles of at least two movable objects in the platoon if the overall energy efficiency ratio is lower than a reference energy efficiency ratio comprises:

    determining expected consumed power in a switching process if the overall energy efficiency ratio is lower than the reference energy efficiency ratio, wherein the switching process is a process of switching the roles of the at least two movable objects in the platoon;
    determining a power difference between power before switching and power after switching of the platoon; and
    switching the roles of the at least two movable objects in the platoon if the power difference exceeds the expected consumed power.

11. The method according to claim 10, wherein the determining expected consumed power in a switching process comprises:

    determining at least one task that needs to be executed in the switching process; and
    determining the expected consumed power based on empirical power of each of the at least one task, wherein the empirical power indicates power required when the corresponding task is executed before current time.

12. A platoon control apparatus, wherein the apparatus comprises:

    a processing unit, configured to obtain current status data of a platoon, wherein the platoon comprises M movable objects, and M is a positive integer greater than or equal to 2, wherein
    the processing unit is further configured to determine a target sensor configuration based on the current status data, wherein the target sensor configuration comprises sensor operating frequency information of N movable objects in the M movable objects, the target sensor configuration is capable of implementing safe traveling of the platoon, and N is less than or equal to M; and
    a communication unit, configured to deliver corresponding sensor operating frequency information to each movable object in the N movable objects, so that the movable object adjusts an operating frequency of a sensor on the movable object based on the corresponding sensor operating frequency information.

13. The apparatus according to claim 12, wherein when determining the target sensor configuration based on the current status data, the processing unit is configured to:
determine the target sensor configuration from a plurality of candidate sensor configurations based on the current status data.

14. The apparatus according to claim 13, wherein the processing unit is further configured to:

determine a plurality of initial sensor configurations, wherein each of the plurality of initial sensor configurations comprises an operating frequency of a sensor of each of the M movable objects;

determine a safety degree of each of the plurality of initial sensor configurations, wherein the safety degree indicates a possibility that a simulated platoon is capable of safe traveling after being set based on the initial sensor configuration; and

determine the plurality of candidate sensor configurations from the plurality of initial sensor configurations based on the safety degree of each of the plurality of initial sensor configurations.

15. The apparatus according to claim 14, wherein when determining the safety degree of each of the plurality of initial sensor configurations, the processing unit is configured to:

for any of the plurality of initial sensor configurations, set a sensor of each simulated object in the simulated platoon based on the any initial sensor configuration, and cause the simulated platoon to travel in a scenario use case of each of a plurality of simulated scenarios;

determine, based on a traveling condition of the simulated platoon in the scenario use case of each simulated scenario, a quantity of scenario use cases in which the simulated platoon is capable of safe traveling in the plurality of simulated scenarios; and

determine a ratio of the quantity of scenario use cases in which safe traveling is available to a total quantity of scenario use cases of the plurality of simulated scenarios as a safety degree of the any initial sensor configuration.

16. The apparatus according to any one of claims 13 to 15, wherein when determining the target sensor configuration from the plurality of candidate sensor configurations based on the current status data, the processing unit is configured to:

input the current status data into a classification model, so that the classification model outputs the target sensor configuration, wherein

the classification model is configured to: classify input data into one of the plurality of candidate sensor configurations and output a classification result.

17. The apparatus according to claim 16, wherein the classification model comprises a minimum regression decision tree, and the processing unit is further configured to:

obtain a plurality of pieces of sample status data, wherein each piece of sample status data indicates one status of the simulated platoon;

construct an initialized minimum regression decision tree based on the plurality of pieces of sample status data, wherein the initialized minimum regression decision tree comprises a plurality of initial classification results, a quantity of the plurality of initial classification results is the same as a quantity of the plurality of candidate sensor configurations, and different initial classification results indicate different status complexity degrees of the simulated platoon; and

bind the plurality of initial classification results to the plurality of candidate sensor configurations one by one, to obtain the minimum regression decision tree, wherein

a higher status complexity level indicated by one initial classification result in the plurality of initial classification results indicates a higher operating frequency of a sensor in a candidate sensor configuration bound to the corresponding initial classification result.

18. The apparatus according to any one of claims 12 to 17, wherein the current status data comprises X status weights that are in a one-to-one correspondence with X statuses, each of the X status weights indicates a complexity degree of a corresponding status, and X is greater than or equal to 1; and

when determining the target sensor configuration based on the current status data, the processing unit is configured to:

determine the target sensor configuration based on the X status weights.

19. The apparatus according to claim 18, wherein the X statuses comprise one or more of an environment status, a task status, and a load status, wherein

a status weight corresponding to the environment status comprises an environment status weight of at least one movable object in the platoon, the environment status weight indicates a complexity degree of an ambient environment status of the corresponding movable object, a status weight corresponding to the task status indicates a complexity degree of a task currently executed by a leader in the platoon, a status weight corresponding to the load status comprises a load status weight of each movable object in the platoon, and the load status weight indicates a complexity degree of load of the corresponding movable object.

20. The apparatus according to any one of claims 12 to 19, wherein the processing unit is further configured to:

obtain current status information of the sensor of each of the M movable objects;
determine an overall energy efficiency ratio of the platoon based on the current status information of the sensor of each of the M movable objects; and
switch roles of at least two movable objects in the platoon if the overall energy efficiency ratio is lower than a reference energy efficiency ratio.

21. The apparatus according to claim 20, wherein when switching the roles of the at least two movable objects in the platoon if the overall energy efficiency ratio is lower than the reference energy efficiency ratio, the processing unit is configured to:

determine expected consumed power in a switching process if the overall energy efficiency ratio is lower than the reference energy efficiency ratio, wherein the switching process is a process of switching the roles of the at least two movable objects in the platoon;
determine a power difference between power before switching and power after switching of the platoon; and
switch the roles of the at least two movable objects in the platoon if the power difference exceeds the expected consumed power.

22. The apparatus according to claim 21, wherein when determining the expected consumed power in the switching process, the processing unit is configured to:

determine at least one task that needs to be executed in the switching process; and
determine the expected consumed power based on empirical power of each of the at least one task, wherein the empirical power indicates power required when the corresponding task is executed before current time.

23. A platoon control apparatus, comprising a processor and a memory, wherein

the memory is configured to: store a program that supports the platoon control apparatus in performing the method according to any one of claims 1 to 11, and store data used to implement the method according to any one of claims 1 to 11; and
the processor is configured to execute the program stored in the memory.

24. An intelligent driving device, comprising the platoon control apparatus according to any one of claims 12 to 23.

**Intelligent driving device 100**

**Traveling system 102**

- Engine 118
- Energy source 119
- Transmission apparatus 120
- Wheels 121

**Sensing system 104**

- Positioning system 122
- IMU 124
- Radar sensor 126
- Laser rangefinder 128
- Image sensor 130

**Control system 106**

- Steering system 132
- Accelerator 134
- Braking unit 136
- Fusion algorithm unit 138
- Computer vision system 140
- Route control system 142
- Obstacle avoidance system 144

**Peripheral device 108**

- Wireless communication system 146
- Vehicle-mounted computer 148
- Microphone 150
- Speaker 152

**Computer system 112**

- Processor 113
- Instructions 115
  Memory 114

Power supply 110

User interface 116

EP 4 586 034 A1

FIG. 1

FIG. 2

FIG. 3

```
┌─────────────────────────────────────────────────────────┐
│  ┌──────────────────────┐      ┌──────────────┐          │
│  │ Pre-trained          │      │  Scenario    │          │
│  │ configuration model  │      │  simulator   │          │
│  └──────────────────────┘      └──────────────┘          │
│  ┌──────────────────────┐                                │
│  │ Safety check         │                                │
│  │ module               │      Classification model      │
│  └──────────────────────┘      generation module 406     │
└─────────────────────────────────────────────────────────┘
```

| Round-view detection result | Traffic complexity evaluation module 401 |

Environment status weight

| Real-time map information |

| Platoon path planning | Task density evaluation module 402 |
| Follow-up control adjustment |
| Anti-collision/Lane keeping |

Task status weight

Platoon power consumption adjustment module 404

Dynamic sensor configuration module 405 — Enable/Disable — Sensor frequency

Dynamic platoon adjustment module 407 — Energy management — Platoon role switching

| Sensor status | Load evaluation module 403 |
| CPU/GPU |
| Communication bandwidth |

Load status weight

Task scheduling module 408 — Common task — Leader task

Load monitoring

FIG. 4

EP 4 586 034 A1

FIG. 5

Obtain current status data of a platoon, where the platoon includes M movable objects, and M is a positive integer greater than or equal to 2 — 601

Determine a target sensor configuration based on the current status data, where the target sensor configuration includes sensor operating frequency information of N movable objects in the M movable objects, the target sensor configuration is capable of implementing safe traveling of the platoon, and N is less than or equal to M — 602

Deliver corresponding sensor operating frequency information to each movable object in the N movable objects, so that the movable object adjusts an operating frequency of a sensor on the movable object based on the corresponding sensor operating frequency information — 603

FIG. 6

Straight-through scenario

Turning scenario

Roundabout scenario

Lane change scenario

Blocking scenario

XX scenario

...

...

FIG. 7

FIG. 8

FIG. 9

Obtain current status information of a sensor of each of M movable objects in a platoon ⌇⌇ 1001

Determine an overall energy efficiency ratio of the platoon based on the current status information of the sensor of each of the M movable objects ⌇⌇ 1002

If the overall energy efficiency ratio is lower than a reference energy efficiency ratio, switch roles of at least two movable objects in the platoon ⌇⌇ 1003

FIG. 10

FIG. 11

Take effect and
start after a sensor is
configured

Extract sensor
information
(a temperature/a
frequency/power)

Overall
energy efficiency
ratio < 60%

No → Sleep for 30 seconds

Yes

Expected consumed
power P1

Power difference P2 before
and after switching

P1 < P2

Yes

Initiate dynamic
adjustment → Next sensor configuration
adjustment

FIG. 12

Platoon control apparatus 1300

Processing unit ∿ 1301

Communication unit ∿ 1302

FIG. 13

## INTERNATIONAL SEARCH REPORT

| International application No. |
| --- |
| **PCT/CN2022/123262** |

### A. CLASSIFICATION OF SUBJECT MATTER

G05D 1/00(2006.01)i

According to International Patent Classification (IPC) or to both national classification and IPC

### B. FIELDS SEARCHED

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE: 智能驾驶, 无人驾驶, 自动驾驶, 无人机, 编队, 车队, 队伍, 列队, 队列, 传感器, 雷达, 摄像头, 相机, 频率, 采样率, 关闭, 睡眠, 节省能耗, 节能, 节约能耗, unmanned, intelligent, autonomous, drive, vehicle, aerial, sensor, camera, radar, team, queue, frequency

### C. DOCUMENTS CONSIDERED TO BE RELEVANT

| Category* | Citation of document, with indication, where appropriate, of the relevant passages | Relevant to claim No. |
| --- | --- | --- |
| X | WO 2020125939 A1 (TOYOTA MOTOR EUROPE) 25 June 2020 (2020-06-25) description, paragraphs [0011]-[0068], and figures 1-3 | 1-24 |
| X | CN 114037964 A (TUSIMPLE, INC.) 11 February 2022 (2022-02-11) description, paragraphs [0020]-[0079], and figures 1-6 | 1-24 |
| A | CN 110418745 A (PELOTON TECHNOLOGY, INC.) 05 November 2019 (2019-11-05) entire document | 1-24 |
| A | CN 110737212 A (HUAWEI TECHNOLOGIES CO., LTD.) 31 January 2020 (2020-01-31) entire document | 1-24 |
| A | CN 105957335 A (XIE QI) 21 September 2016 (2016-09-21) entire document | 1-24 |
| A | US 2019354101 A1 (CUMMINS INC.) 21 November 2019 (2019-11-21) entire document | 1-24 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2022** | **02 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/123262**

| Patent document cited in search report | | | Publication date (day/month/year) | Patent family member(s) | | | Publication date (day/month/year) |
|---|---|---|---|---|---|---|---|
| WO | 2020125939 | A1 | 25 June 2020 | None | | | |
| CN | 114037964 | A | 11 February 2022 | US | 2022017113 | A1 | 20 January 2022 |
| CN | 110418745 | A | 05 November 2019 | CA | 3042647 | A1 | 11 May 2018 |
| | | | | JP | 2020500367 | A | 09 January 2020 |
| | | | | WO | 2018085107 | A1 | 11 May 2018 |
| | | | | EP | 3535171 | A1 | 11 September 2019 |
| | | | | IN | 201917021924 | A | 19 July 2019 |
| | | | | CA | 3042647 | C | 26 November 2019 |
| | | | | EP | 3535171 | A4 | 27 November 2019 |
| | | | | JP | 7152395 | B2 | 12 October 2022 |
| CN | 110737212 | A | 31 January 2020 | WO | 2020015682 | A1 | 23 January 2020 |
| | | | | CN | 110737212 | B | 01 January 2021 |
| CN | 105957335 | A | 21 September 2016 | None | | | |
| US | 2019354101 | A1 | 21 November 2019 | US | 11454970 | B2 | 27 September 2022 |

Form PCT/ISA/210 (patent family annex) (January 2015)